# FASCICULE DE BREVET EUROPEEN

(11) **EP 4 630 652 B1**
(45) Date de publication et mention de la délivrance du brevet: **11.11.2026**
(21) Numéro de dépôt: 23817734.9
(22) Date de dépôt: 04.12.2023
(51) Int. Cl.: F01D 5/02, F01D 21/00, G01M 1/24, G01M 15/14, H02K 15/16, F01D 21/04, F16F 15/00, H02K 15/165

(54) **MACHINE TOURNANTE ET PROCÉDÉ D'ÉQUILIBRAGE DU ROTOR DE CELLE-CI, PROGRAMME D'ORDINATEUR**
ROTIERENDE MASCHINE UND VERFAHREN ZUM AUSWUCHTEN DES ROTORS, COMPUTERPROGRAMM
ROTATING MACHINE AND METHOD FOR BALANCING THE ROTOR THEREOF, COMPUTER PROGRAM

(30) Priorité: 05.12.2022 FR 2212784
(43) Date de publication de la demande: 15.10.2025
(73) Titulaire: Electricité de France, 75008 Paris (FR)
(72) Inventeur: HASSINI, Mohamed-Amine, 92290 Châtenay-Malabry (FR)
(74) Mandataire: Regimbeau
(86) Numéro de dépôt international: PCT/EP2023/084117
(87) Numéro de publication internationale: WO 2024/121054

(56) Documents cités:
- EP-A1- 3 301 257
- EP-A1- 3 301 257
- US-A- 4 060 707
- US-A- 4 060 707
- US-A- 4 977 510
- US-A- 4 977 510
- ZUMBACH M. ET AL: "On-Line Thermal Balancing Technique for a Large Turbo-Generator", JOURNAL OF VIBRATION AND ACOUSTICS., vol. 114, no. 1, 1 January 1992 (1992-01-01), XX, pages 60 - 66, XP093052647, ISSN: 1048-9002, Retrieved from the Internet <URL:http://asmedigitalcollection.asme.org/vibrationacoustics/article-pdf/114/1/60/5716364/60_1.pdf> DOI: 10.1115/1.2930235
- ZUMBACH M. ET AL: "On-Line Thermal Balancing Technique for a Large Turbo-Generator", vol. 114, no. 1, 1 January 1992 (1992-01-01), XX, pages 60 - 66, XP093052647, ISSN: 1048-9002, Retrieved from the Internet <URL:http://asmedigitalcollection.asme.org/vibrationacoustics/article-pdf/114/1/60/5716364/60_1.pdf> [retrieved on 20230607], DOI: 10.1115/1.2930235

## Description

L'invention concerne une machine tournante, ainsi qu'un procédé d'équilibrage du rotor de la machine tournante.

Le domaine de l'invention concerne tout type de machines tournantes, notamment les machines tournantes de grandes puissances, comme par exemple les turbines à vapeurs, les turbines hydrauliques et les groupes motopompes primaires des centrales nucléaires de production d'électricité. Les exemples de machines tournantes indiqués sont non limitatifs.

L'un des problèmes des machines tournantes est qu'elles sont soumises à des vibrations lorsque le rotor de la machine tourne par rapport à son stator.

L'invention cherche à diminuer, voire supprimer, ces vibrations.

Plusieurs défauts peuvent conduire un rotor à vibrer de manière excessive. Le balourd mécanique (ou déséquilibre) du rotor est le défaut le plus répandu, car il est impossible de fabriquer un rotor parfait, c'est-à-dire un rotor avec une répartition homogène de la masse autour de son axe de rotation. En effet, une répartition non homogène crée un champ de forces centrifuge qui provoque la vibration de la machine. En plus du bruit indésirable, ces vibrations peuvent provoquer la détérioration des étanchéités et la fatigue prématurée des composants mécaniques constituant la machine tournante comme par exemple celle de roulements à billes, d'accouplements ou de supports de paliers. Normalement, les rotors des machines tournantes sont équilibrés durant la phase de fabrication pour minimiser le déséquilibre de masse autour de l'axe de rotation et maintenir les vibrations à des amplitudes acceptables. Malheureusement, dans certaines machines, le balourd peut évoluer au cours du temps en fonctionnement, entrainant des vibrations excessives. Cette évolution peut être causée par l'érosion, les phénomènes de cavitation, la corrosion, l'encrassement, l'effet dit « Newkirk » ou l'effet dit « Morton ».

La cavitation est un phénomène provoqué par la dépression d'un liquide en deçà de sa pression de vapeur saturante. Des bulles de vapeurs se forment alors de manière transitoire avant d'imploser d'une manière qui peut être si violente que la pression et la température à l'intérieur de la bulle peuvent atteindre plusieurs milliers de bars et plusieurs milliers de degrés Celsius. L'implosion génère aussi une onde de choc dans le liquide qui peut éroder les surfaces solides engendrant de fait une perte de masse générant la création du balourd mécanique.

La corrosion résulte de la réaction chimique d'un matériau constituant une partie tournante (rotor, ailette, disque, etc...) de la machine avec un oxydant. Cette réaction altère la composition du matériau et peut engendrer une perte de matière (c'est le cas des bords de fuite des ailettes) conduisant par conséquent à la création du balourd mécanique.

L'effet Newkirk désigne les vibrations induites par la déformation du rotor suite à un échauffement asymétrique de ce dernier. L'échauffement est créé par le frottement entre le rotor et une partie fixe, par exemple entre le rotor et un joint d'étanchéité. Ce phénomène peut devenir instable et conduire à des vibrations qui augmentent de manière continue dans le temps. Les méthodes classiques d'équilibrage ne peuvent résoudre le problème posé par l'effet Newkirk.

L'effet Morton désigne les vibrations induites par la déformation du rotor suite à un échauffement asymétrique de ce dernier. L'échauffement est créé par le cisaillement de l'huile dans les paliers hydrodynamiques. Il y a alors un couplage entre les vibrations du rotor et la quantité de chaleur générée par cisaillement. Ce couplage peut être instable à l'instar de l'effet Newkirk. Les méthodes classiques d'équilibrage ne peuvent résoudre le problème posé par l'effet Morton.

Lorsque le déséquilibre génère un niveau de vibration inacceptable, il est nécessaire de procéder à l'équilibrage du rotor.

Une méthode classique pour réaliser l'équilibrage du rotor consiste à ajouter et/ou retrancher des masses à des positions axiales spécifiques du rotor afin d'obtenir une répartition symétrique de masse autour de l'axe de rotation. L'inconvénient de la méthode classique est qu'elle est coûteuse et nécessite beaucoup de temps entrainant une très forte indisponibilité car l'ajout et/ou la suppression de masses requiert l'arrêt de la machine. De plus, la méthode classique ne permet d'équilibrer le rotor que pour un jeu limité de conditions de fonctionnement. A titre d'exemple, le comportement vibratoire d'une turbine à vapeur dépend fortement de la vitesse de rotation, de la puissance générée, de la température de la source de l'eau fournie à la turbine (température de l'eau de la rivière, de la mer ou de l'océan qui varient suivant les saisons), de la température de la vapeur et de sa qualité. Plus particulièrement, l'effort centrifuge généré par le déséquilibre de masse autour de l'axe de rotation varie avec la vitesse de rotation du rotor. Dans la majorité des cas, l'équilibrage est réalisé à une seule vitesse de rotation qui est souvent la vitesse de rotation nominale, qui est la vitesse d'exploitation de la machine tournante. La correction nécessaire pour réduire les vibrations à la vitesse nominale peut aggraver les vibrations à d'autres vitesses de fonctionnement (par exemple celui d'une éolienne) ou pendant les transitoires de montées et descentes de vitesses de rotation.

A titre d'exemple, prenons l'équilibrage du groupe turbo-alternateur d'une centrale nucléaire. Cette machine tournante est composée de plusieurs rotors accouplés rigidement. Chaque rotor est équilibré après usinage chez le constructeur. L'assemblage des rotors sur le site d'exploitation génère un déséquilibre du fait des imperfections à l'accouplement. Pour corriger ce type de défaut, un équilibrage est réalisé à la vitesse nominale de rotation des rotors de 1500 tours par minute. Dans beaucoup de cas, la correction du défaut à la vitesse nominale ne permet pas de diminuer les vibrations à d'autres vitesses de rotation. De plus, l'amélioration apportée par l'équilibrage n'est efficace que pour une puissance ou une pression du vide condenseur donnée. En effet, les caractéristiques de l'écoulement aérodynamique (pression, humidité et température) de la vapeur dépendent de la pression du vide condenseur. La modification de la température et les déformations thermomécaniques du rotor viennent modifier la répartition des masses autour de l'axe de rotation. De plus, l'érosion des aubages de la turbine ou l'évolution de l'état thermique de la machine conduisent à un déséquilibre qui évolue lentement dans le temps. Par conséquent, l'équilibrage doit être réalisé lorsque l'état thermique de la machine est stabilisé. L'atteinte d'un état thermique stabilisé nécessite plusieurs heures voire plusieurs jours de fonctionnement du fait de la très grande inertie thermique des rotors. Compte tenu de ces contraintes, l'utilisation de la méthode classique suscitée conduit à une très forte indisponibilité de la turbine et contraint l'exploitant à utiliser la machine avec un jeu de paramètres du reste de l'installation proches de ceux observés lors de l'équilibrage, ce qui impacte défavorablement la manœuvrabilité de la machine lorsqu'il s'agit par exemple de modifier ces paramètres afin d'adapter la puissance générée à la demande du réseau électrique (suivi de charge). En effet, la manœuvrabilité deviendra un enjeu de plus en plus important avec l'introduction des énergies renouvelables intermittentes, nécessitant de sortir du jeu des paramètres nominaux.

Ainsi, selon la méthode classique, aujourd'hui, dans la plus grande majorité des cas, la correction du déséquilibre de masse autour de l'axe de rotation est réalisée en ajoutant des masses ou en enlevant des masses à des positions axiales spécifiques du rotor. Ces positions axiales sont appelées plans d'équilibrage, ces plans coupant normalement l'axe de rotation. Lorsqu'il existe, un plan d'équilibrage consiste, le plus souvent, en un ensemble de trous répartis de manière uniforme autour de l'axe de rotation. Des masses sont placées dans ces trous d'équilibrage pour permettre de corriger le déséquilibre. Le nombre de trous ainsi que la manière avec laquelle les plans d'équilibrage sont placés le long du rotor ont une influence directe sur la qualité de l'équilibrage de la machine.

Ces méthodes connues nécessitent plusieurs arrêts et démarrages de la machine, qui ont un coût élevé et nécessitent beaucoup de temps lors de la mise en œuvre. De plus, ces méthodes connues ne permettent d'équilibrer le rotor que pour un jeu limité de conditions de fonctionnement. En outre, ces méthodes connues ont l'inconvénient d'être intrusives dans le rotor. Par ailleurs, on connaît par le document FR-A-2 303 277 un dispositif d'équilibrage pour machine tournante comportant, afin d'équilibrer le rotor pendant que celui-ci est en fonctionnement en lui imposant une déformation par effet thermique asymétrique, un capteur apte à détecter un déséquilibre du rotor et un transducteur de signaux associé à ce capteur, une source d'énergie, pouvant utiliser un faisceau laser, apte à délivrer des impulsions unilatérales d'énergie à une portion choisie du rotor pour en provoquer un échauffement asymétrique, et un dispositif de commande transmettant les signaux dudit capteur à la source d'énergie aux fins de réglage des positions angulaires des impulsions d'énergie par rapport au rotor, la fréquence de ces impulsions d'énergie étant dans un rapport entier avec la vitesse du rotor.

Le dispositif d'équilibrage connu par le document FR-A-2 303 277 pose toutefois le problème suivant.

Le dispositif d'équilibrage connu par le document FR-A-2 303 277 est empirique et ne fournit pas de méthode calculatoire pour régler correctement le chauffage effectué par la source d'énergie afin d'obtenir l'équilibrage du rotor. Ainsi, un inconvénient de celui-ci est que le réglage du chauffage de la source d'énergie n'est pas précis, conduisant à des aléas pour obtenir l'équilibrage du rotor. Ce dispositif ne peut pas résoudre le problème des vibrations qui seraient induites par l'effet Newkirk ou l'effet Morton.

Un autre document antérieur pertinent pour l'invention est le document suivant : Zumbach M. et al., « Technique d'équilibrage thermique en ligne pour un grand turbogénérateur », JOURNAL OF VIBRATION AND ACOUSTICS., vol. 114, no. 1, 1 janvier 1992, pages 60-66, DOI : 10.1115/1.2930235.

Or, le problème est que l'on cherche à améliorer la précision et la rapidité du réglage de la source d'énergie conduisant d'une manière plus certaine à l'équilibrage du rotor.

Un objectif de l'invention est d'obtenir une machine tournante, ainsi qu'un procédé d'équilibrage du rotor de celle-ci, qui permettent d'équilibrer le rotor pour diminuer ses vibrations lorsqu'il tourne, en résolvant le problème mentionné ci-dessus et en en palliant les inconvénients mentionnés ci-dessus.

A cet effet, un premier objet de l'invention est un procédé d'équilibrage du rotor d'une machine tournante, la machine tournante comportant un stator, le rotor étant apte à tourner autour d'un axe de rotation par rapport au stator,
la machine tournante comportant
au moins un capteur de vibrations du rotor, le capteur de vibrations étant monté sur le stator,
au moins une tête de traitement thermique, qui occupe une plage angulaire déterminée de moins de 360° autour de l'axe de rotation en face du rotor, qui est sans contact avec le rotor et qui est apte à appliquer au rotor sans contact avec le rotor dans la plage angulaire déterminée une puissance de chauffe, étant montée sur le stator,
au moins un capteur de position angulaire en rotation du rotor autour de l'axe de rotation par rapport au stator étant monté sur le stator,
la machine comportant un contrôleur d'équilibrage du rotor,
caractérisée en ce que
la puissance de chauffe étant un nombre complexe ayant un module positif représentant une amplitude de chauffage appliquée par la au moins une tête de traitement thermique, le nombre complexe ayant un argument représentant une position angulaire à laquelle l'amplitude de chauffage est appliquée par la au moins une tête de traitement thermique dans la plage angulaire déterminée,
le contrôleur d'équilibrage du rotor est apte à régler la puissance de chauffe P = r · *H · V e^{jβ}*
où H est un paramètre de réglage d'une amplitude d'un moment de flexion du rotor, créé par la tête de traitement thermique, et est un réel supérieur ou égal à zéro,
B est un paramètre de réglage d'une phase de la puissance de chauffe,
r est un coefficient de sensibilité de flexion du rotor à la puissance de chauffe appliquée par la tête de traitement thermique, le coefficient r de sensibilité étant préenregistré dans le contrôleur d'équilibrage,
au moins une carte prescrite de stabilité du rotor pour au moins une vitesse de rotation déterminée du rotor autour de l'axe de rotation par rapport au stator et pour au moins une position axiale de la tête de traitement thermique, étant préenregistrée dans le contrôleur d'équilibrage et indiquant au moins une zone stable et au moins une zone instable pour des couples de valeurs de H et de B, la carte de stabilité étant paramétrée par un facteur Fᵣ de réduction de vibrations déterminé au moins dans la zone stable,
le procédé comportant au moins les étapes suivantes, effectuées d'une manière itérative pendant la rotation du rotor autour de l'axe de rotation par rapport au stator à la vitesse de rotation déterminée, pour, à chaque itération k :
   au cours d'une première étape, mesurer, par le capteur de vibrations, une amplitude Vₖ d'une vibration V du rotor et une phase αₖ de la vibration V du rotor par rapport à une référence de phase selon l'équation *V* = *Vₖ* · *e^{j·αₖ},*
   au cours d'une deuxième étape, identifier une valeur Hₖ du paramètre de réglage H et une valeur βₖ du paramètre de réglage B, qui sont situées dans la zone stable de la carte prescrite de stabilité et pour lesquelles *Fᵣ* < 1, par le contrôleur d'équilibrage,
   au cours d'une troisième étape, appliquer la puissance de chauffe *Pₖ = r · Hₖ · Vₖ* · *e*^{j·(αₖ+βₖ}) par la tête de traitement thermique via le contrôleur d'équilibrage au rotor et en présence de la vibration V mesurée par le capteur de vibrations.

Suivant un mode de réalisation de l'invention, le coefficient r de sensibilité de flexion du rotor à la puissance de chauffe appliquée par la tête de traitement thermique est prescrit dans le contrôleur d'équilibrage comme étant égal au rapport d'une valeur réelle P₁, déterminée et non nulle, de la puissance de chauffe sur une valeur de moment de flexion du rotor mesurée ou calculée, provoquée par l'application de la valeur réelle de la puissance de chauffe par la tête de traitement thermique via le contrôleur d'équilibrage au rotor.

Suivant un mode de réalisation de l'invention, *r · H · Vₖ* ≤ *Pₘₐₓ*
où Pₘₐₓ est une valeur réelle maximum, positive et non nulle de la puissance de chauffe.

Suivant un mode de réalisation de l'invention, le rotor est guidé en rotation autour de son axe de rotation par rapport au stator par au moins deux paliers distants l'un de l'autre le long de l'axe de rotation, la tête de traitement thermique et le capteur de vibration étant placés entre les paliers,
βₖ = 0° pour la machine dont le rotor possède une masse en porte-à-faux de l'un des paliers, qui est inférieure à une masse intermédiaire du rotor se trouvant entre les paliers et pour la machine opérant à une fréquence de rotation du rotor, qui est supérieure à une fréquence d'un premier mode de flexion du rotor.

Suivant un mode de réalisation de l'invention, le rotor est guidé en rotation autour de son axe de rotation par rapport au stator par au moins deux paliers distants l'un de l'autre le long de l'axe de rotation, la tête de traitement thermique et le capteur de vibration étant placés entre les paliers,
βₖ = 180° pour la machine dont le rotor possède une masse en porte-à-faux de l'un des paliers, qui est inférieure à une masse intermédiaire du rotor se trouvant entre les paliers et pour la machine opérant à une fréquence de rotation du rotor, qui est inférieure à une fréquence d'un premier mode de flexion du rotor.

Suivant un mode de réalisation de l'invention, les première, deuxième et troisième étapes sont effectuées d'une manière itérative pour au moins une itération précédente k et au moins une itération suivante k+1, pour, lors de la deuxième étape de l'itération suivante k+1 :
régler par le contrôleur d'équilibrage la valeur Hₖ₊₁ du paramètre de réglage H tel que ${H}_{k + 1} = \frac{{γP}_{max}}{r ⋅ {V}_{k + 1}}$,
   où
Vₖ₊₁ est l'amplitude de la vibration V du rotor, ayant été mesurée lors de la première étape de l'itération suivante k+1,
*γ* est un facteur de réglage d'itération, qui est un réel strictement positif et inférieur ou égal à 1 et qui est préenregistré dans le contrôleur d'équilibrage,
et identifier par le contrôleur d'équilibrage la valeur *β*_{*k*+1} du paramètre de réglage β à partir de la carte de stabilité prescrite permettant d'obtenir la valeur la plus petite du facteur Fᵣ de réduction de vibrations parmi un ensemble fini de valeurs déterminées du facteur Fᵣ de réduction de vibrations.

Suivant un mode de réalisation de l'invention, *γ* = 1.

Suivant un mode de réalisation de l'invention, les première, deuxième et troisième étapes sont effectuées d'une manière itérative pour au moins une itération précédente k et au moins une itération suivante k+1 jusqu'à ce que la valeur Hₖ₊₁ du paramètre de réglage H de l'itération suivante k+1atteigne un seuil prescrit Hₘₐₓ, pour :
lors de la deuxième étape de l'itération suivante k+1, régler par le contrôleur d'équilibrage la valeur Hₖ₊₁ du paramètre de réglage H et la valeur βₖ₊₁ du paramètre de réglage B, avec Hₖ₊₁ égal à une fonction prescrite, croissante en fonction du temps jusqu'au seuil prescrit Hₘₐₓ,
appliquer lors de la troisième étape de l'itération suivante k+1, par la tête de traitement thermique via le contrôleur d'équilibrage au rotor et en présence de la vibration V mesurée par le capteur de vibrations, la puissance de chauffe ${P}_{k + 1} = r ⋅ {H}_{k + 1} ⋅ {V}_{k + 1} ⋅ {e}^{j ⋅ \left({α}_{k + 1}+{β}_{k + 1}\right)}$
où Vₖ₊₁ est l'amplitude de la vibration V du rotor, ayant été mesurée lors de la première étape de l'itération suivante k+1.

Suivant un mode de réalisation de l'invention, la fonction croissante prescrite est une rampe linéaire croissante en fonction du temps jusqu'au seuil prescrit Hₘₐₓ ou une rampe affine croissante en fonction du temps jusqu'au seuil prescrit Hₘₐₓ.

Suivant un mode de réalisation de l'invention, le procédé comporte en outre les étapes suivantes, effectuées par le contrôleur d'équilibrage avant les première, deuxième et troisième étapes :
identification d'un couple d'une valeur cible H_{c} du paramètre de réglage H et d'une valeur cible β_{c} du paramètre de réglage B, qui est situé dans la zone stable de la carte prescrite de stabilité et donnant la valeur la plus petite du facteur Fᵣ de réduction de vibration, strictement inférieure à 1, parmi un ensemble fini de valeurs déterminées du facteur Fᵣ de réduction de vibrations,
identification d'un couple d'une valeur de départ H_{d} du paramètre de réglage H et d'une valeur de départ β_{d} du paramètre de réglage B, qui est situé dans la zone stable de la carte prescrite de stabilité et pour lequel le facteur Fᵣ de réduction de vibrations est strictement inférieure à 1, la valeur de départ H_{d} du paramètre de réglage H étant inférieure à la valeur cible H_{c} du paramètre de réglage H,
identification dans la carte prescrite de stabilité d'un chemin allant du couple de H_{d} et de β_{d} au couple de H_{c} et de β_{c} par les couples successifs des valeurs de Hₖ et de βₖ, qui sont situés dans la zone stable de la carte prescrite de stabilité,
les première, deuxième et troisième étapes étant effectuées d'une manière itérative pour les couples successifs des valeurs de Hₖ et de βₖ pour aller du couple de H_{d} et de β_{d} au couple de H_{c} et de β_{c}.

Suivant un mode de réalisation de l'invention, le procédé comporte en outre, avant les première, deuxième et troisième étapes, une étape de choix d'une durée totale, non nulle, tₘ pour aller du couple de H_{d} et de β_{d} au couple de H_{c} et de β_{c}, effectuée par le contrôleur d'équilibrage.

Suivant un mode de réalisation de l'invention, les première, deuxième et troisième étapes sont effectuées d'une manière itérative pour au moins une itération précédente k et au moins une itération suivante k+1, pour :
si k=0 ou Vₖ₊₁ > Vₖ, identifier par le contrôleur d'équilibrage lors de la deuxième étape de l'itération suivante k+1 la valeur Hₖ₊₁ du paramètre de réglage H et la valeur *β*_{*k*+1} du paramètre de réglage B, qui sont situées dans la zone stable de la carte prescrite de stabilité,
et sinon identifier par le contrôleur d'équilibrage lors de la deuxième étape de l'itération suivante k+1 la valeur Hₖ₊₁ du paramètre de réglage H et la valeur *β*_{*k*+1} du paramètre de réglage β avec Hₖ₊₁= Hₖ et βₖ₊₁= βₖ.
Suivant un mode de réalisation de l'invention, la machine comporte m capteurs cᵢ de vibrations du rotor, qui sont montés sur le stator, où m est un entier naturel supérieur ou égal à 2 et i est un entier allant de 1 à m,
le procédé comporte en outre les étapes suivantes, avant les première, deuxième et troisième étapes :
   - au cours d'une première étape préparatoire, mesure du vecteur complexe de mesure de vibrations ${Q}_{d} = {\left\{{q}_{{d}_{i}}{e}^{{jγ}_{{d}_{i}}}\right\}}^{T}$ par les m capteurs cᵢ de vibrations, où *q_{dᵢ}* est l'amplitude des vibrations du rotor mesurées respectivement par le capteur cᵢ de vibrations et *γ_{dᵢ}* est la phase des vibrations du rotor mesurées respectivement par le capteur cᵢ de vibrations,
au cours d'une deuxième étape préparatoire, calcul de la carte prescrite de stabilité en association avec des valeurs du facteur Fᵣ de réduction de vibrations en répétant les sous-étapes suivantes pour chaque valeur de H et de *β* se trouvant dans la zone stable de la carte de stabilité par le contrôleur d'équilibrage :
   - calculer *Q_{f}* solution du système d'équations : $Ξ ⋅ {Q}_{f} = {Q}_{d}$
avec ${Q}_{f} = {\left\{{q}_{{f}_{i}}{e}^{{jγ}_{{f}_{i}}}\right\}}^{T}$
   - calculer les valeurs Fᵣ (H, B) du facteur Fᵣ de réduction de vibrations telles que ${F}_{r} \left(H, β\right) = max \left({\left\{\frac{{q}_{{f}_{i}}}{{q}_{{d}_{i}}}\right\}}_{i ∈ \left[1, m\right]}\right)$
où la matrice Ξ est calculée de la manière suivante :
   -- calculer une première matrice A telle que *A = -M ·* Ω² *+ j* · Ω · *C + K*
la machine étant représentée par un modèle à éléments finis, comportant des modèle éléments finis, dans lequel la tête de traitement thermique se trouve entre un nœud Ng d'un maillage de la machine et un nœud Nd du maillage de la machine et le capteur de vibration se trouve en face d'un nœud Nc du maillage de la machine,
   où M est une matrice prescrite de masse du modèle à éléments finis de la machine,
*C* étant une matrice prescrite d'amortissement du modèle à éléments finis de la machine,
K étant une matrice prescrite de rigidité du modèle à éléments finis de la machine,
Ω est la vitesse de rotation,
   -- calculer une deuxième matrice Π de liaison de degrés de liberté, la matrice Π ayant les valeurs suivantes :
      --- valeur 1 à sa ligne tdry1, colonne tx,
      --- valeur j à sa ligne tdry1, colonne ty,
      --- valeur j à sa ligne tdrx1, colonnne tx,
      --- valeur -1 à sa ligne tdrx1, colonne ty,
      --- valeur -1 à sa ligne tdry2, colonne tx,
      --- valeur -j à sa ligne tdry2, colonne ty,
      --- valeur -j à sa ligne tdrx2, colonnne tx,
      --- valeur 1 à sa ligne tdrx2, colonne ty,
      --- 0 ailleurs,
où j est le nombre complexe racine carrée de -1,
X est une première direction perpendiculaire à l'axe de rotation,
Y est une deuxième direction perpendiculaire à la première direction X et à l'axe de rotation,
tx est l'indice du degré de liberté de déplacement en translation suivant la direction X du nœud Nc,
ty est l'indice du degré de liberté de déplacement en translation suivant la direction Y du nœud Nc,
tdrx1 est l'indice du degré de liberté de déplacement en rotation autour de la direction X du nœud Ng,
tdry1 est l'indice du degré de liberté de déplacement en rotation autour de la direction Y du nœud Ng,
tdrx2 est l'indice du degré de liberté de déplacement en rotation autour de la direction X du nœud Nd,
tdry2 est l'indice du degré de liberté de déplacement en de déplacement en rotation autour de la direction Y du nœud Nd,
-- calculer une troisième matrice R de passage, ayant m lignes et n colonnes, où
i est l'indice pour les lignes de la matrice R, ainsi que respectivement pour les capteurs cᵢ de vibrations du rotor et va de 1 à m,
n est le nombre de degrés de liberté du modèle à élément finis,
tᵢ est l'indice pour les colonnes de la matrice R, ainsi que pour les degrés de libertés de déplacement correspondant à respectivement les capteurs cᵢ de vibrations du rotor pour i allant de 1 à m,
la matrice R de passage ayant les valeurs suivantes :
   R(i, tᵢ)=1 pour i allant de 1 à m,
   0 ailleurs,
      -- calculer la matrice Ξ , ayant m lignes et n colonnes, où $Ξ = R ⋅ \left(I-H⋅{e}^{jβ}⋅{A}^{- 1}⋅Π\right)$ où *A*⁻¹ est la matrice inverse, ayant été calculée, de la matrice A.

Un deuxième objet de l'invention est une machine tournante comportant
un stator,
un rotor apte à tourner autour d'un axe de rotation par rapport au stator, au moins un capteur de vibrations du rotor, le capteur de vibrations étant monté sur le stator,
au moins une tête de traitement thermique, qui occupe une plage angulaire déterminée de moins de 360° autour de l'axe de rotation en face du rotor, qui est sans contact avec le rotor et qui est apte à appliquer au rotor sans contact avec le rotor dans la plage angulaire déterminée une puissance de chauffe, étant montée sur le stator,
au moins un capteur de position angulaire en rotation du rotor autour de l'axe de rotation par rapport au stator étant monté sur le stator,
un contrôleur d'équilibrage du rotor,
caractérisée en ce que
la puissance de chauffe étant un nombre complexe ayant un module positif représentant une amplitude de chauffage appliquée par la au moins une tête de traitement thermique, le nombre complexe ayant un argument représentant une position angulaire à laquelle l'amplitude de chauffage est appliquée par la au moins une tête de traitement thermique dans la plage angulaire déterminée,
le contrôleur d'équilibrage du rotor est apte à régler la puissance de chauffe *P* = *r* · *H · V e^{jβ}*
où H est un paramètre de réglage d'une amplitude de moment de flexion créé par la tête de traitement thermique et est un réel supérieur ou égal à zéro,
β est un paramètre de réglage d'une phase de la puissance de chauffe,
r est un coefficient de sensibilité de flexion du rotor à la puissance de chauffe appliquée par la tête de traitement thermique, le coefficient r de sensibilité étant préenregistré dans le contrôleur d'équilibrage,
au moins une carte prescrite de stabilité du rotor pour au moins une vitesse de rotation déterminée du rotor autour de l'axe de rotation par rapport au stator et pour au moins une position axiale de la tête de traitement thermique, étant préenregistrée dans le contrôleur d'équilibrage et indiquant au moins une zone stable et au moins une zone instable pour des couples de valeurs de H et de B, la carte de stabilité étant paramétrée par un facteur Fᵣ de réduction de vibrations déterminé au moins dans la zone stable,
le contrôleur d'équilibrage du rotor et le capteur de vibrations étant configurés pour mettre en œuvre au moins les étapes suivantes, effectuées d'une manière itérative pendant la rotation du rotor autour de l'axe de rotation par rapport au stator à la vitesse de rotation déterminée, pour, à chaque itération k :
   au cours d'une première étape, mesure, par le capteur de vibrations, d'une amplitude Vₖ d'une vibration V du rotor et d'une phase αₖ de la vibration V du rotor par rapport à une référence de phase selon l'équation *V* = *Vₖ* · *e^{j·αₖ},*
   au cours d'une deuxième étape, identification d'une valeur Hₖ du paramètre de réglage H et d'une valeur βₖ du paramètre de réglage B, qui sont situées dans la zone stable de la carte prescrite de stabilité et pour lesquelles *Fᵣ* < 1, par le contrôleur d'équilibrage,
   au cours d'une troisième étape, application de la puissance de chauffe *Pₖ = r · Hₖ · Vₖ · e*^{j·(αₖ+βₖ}) par la tête de traitement thermique via le contrôleur d'équilibrage au rotor et en présence de la vibration V mesurée par le capteur de vibrations.

Un troisième objet de l'invention est un programme d'ordinateur, comportant des instructions de code pour la mise en œuvre au moins les deuxième et troisième étapes du procédé d'équilibrage du rotor d'une machine tournante tel que décrit ci-dessus, lorsque le programme d'ordinateur est exécuté sur un contrôleur.

L'invention sera mieux comprise à la lecture de la description qui va suivre, donnée uniquement à titre d'exemple non limitatif en référence aux figures ci-dessous des dessins annexés.
[Fig. 1] représente une vue schématique de face d'une machine tournante suivant un mode de réalisation de l'invention.
[Fig. 2] représente une vue schématique de face du rotor de la machine tournante suivant un mode de réalisation de l'invention.
[Fig. 3] représente une vue schématique en vue de côté d'une machine tournante suivant un mode de réalisation de l'invention.
[Fig. 4] représente un chronogramme de temps d'activation d'une tête de traitement dans la machine tournante suivant un mode de réalisation de l'invention.
[Fig. 5] représente une vue schématique de face d'une déformation provoquée par un différentiel de température sur la machine tournante suivant un mode de réalisation de l'invention.
[Fig. 6] représente une vue schématique en vue de côté d'une machine tournante suivant un mode de réalisation de l'invention.
[Fig. 7] représente une vue schématique en vue de côté d'une machine tournante suivant un mode de réalisation de l'invention.
[Fig. 8] représente une vue schématique en vue de côté d'une machine tournante suivant un mode de réalisation de l'invention.
[Fig. 9] représente une vue schématique de face d'une machine tournante suivant un mode de réalisation de l'invention.
[Fig. 10] représente un organigramme du procédé d'équilibrage suivant l'invention.
[Fig. 11] représente un exemple de carte de stabilité utilisée dans le procédé d'équilibrage suivant l'invention.
[Fig. 12] représente un autre exemple de carte de stabilité utilisée dans le procédé d'équilibrage suivant l'invention.
[Fig. 13] représente un exemple modèle à éléments finis utilisé dans le procédé d'équilibrage suivant l'invention.
[Fig. 14] représente un organigramme d'un premier mode de réalisation du procédé d'équilibrage suivant l'invention.
[Fig. 15] représente un organigramme d'un deuxième mode de réalisation du procédé d'équilibrage suivant l'invention.
[Fig. 16] représente un exemple de fonction pouvant être utilisé dans le deuxième mode de réalisation du procédé d'équilibrage suivant l'invention.
[Fig. 17] représente un organigramme d'un troisième mode de réalisation du procédé d'équilibrage suivant l'invention.
[Fig. 18] représente un organigramme d'un quatrième mode de réalisation du procédé d'équilibrage suivant l'invention.
[Fig. 19] représente un organigramme d'un cinquième mode de réalisation du procédé d'équilibrage suivant l'invention.

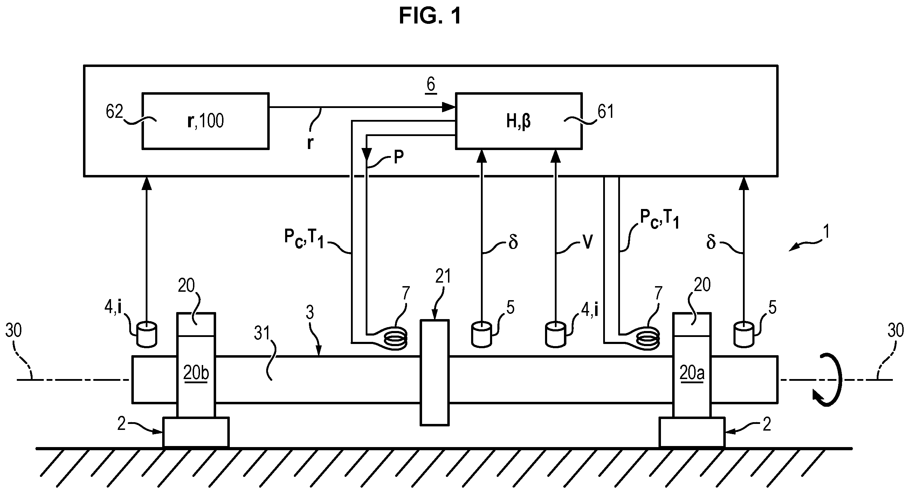

Aux figures 1, 2, 3, 6, 7, 8 et 9, la machine tournante 1 suivant l'invention comporte un stator 2 et un rotor 3 apte à tourner par rapport au stator 2 autour d'un axe 30 de rotation de ce rotor 3. Le stator peut comporter un ou plusieurs premiers bobinages électriques répartis autour de l'axe 30. Le stator 2 est considéré comme étant la partie fixe de la machine tournante 1 et peut comporter des éléments autres que les premiers bobinages électriques, tel qu'un bâti ou autres. Le rotor 3 comporte un arbre rotatif autour de l'axe 30 de rotation et peut comporter un ou plusieurs éléments magnétiques et/ou deuxièmes bobinages électriques, répartis autour de l'axe 30 et fixés à l'arbre. Le rotor 3 est guidé en rotation autour de son axe 30 par un ou plusieurs paliers 20 fixés au stator 2. Le rotor 3 peut avoir un ou plusieurs disques 21 fixés à l'arbre.

Dans un premier cas, la machine tournante 1 peut fonctionner en génératrice d'électricité, c'est-à-dire que le rotor 3 est apte à être fixé à une source de rotation mécanique, entraînant le rotor 3 en rotation autour de l'axe 30 pour générer du courant électrique dans les premiers bobinages électriques du stator 2. La rotation du rotor 3 induit un champ magnétique variable par ses éléments magnétiques et/ou deuxièmes bobinages électriques mis en rotation. Le champ magnétique variable induit aux bornes des premiers bobinages du stator 4 une tension électrique appelée force électromotrice. Le stator 4 comporte une ou plusieurs phases ayant chacune une ou plusieurs bornes de connexion avec l'extérieur, pour fournir vers l'extérieur le courant électrique produit dans les premiers bobinages électriques du stator 4 lorsque le rotor 3 est mis en rotation autour de l'axe 30. La machine tournante fonctionnant en génératrice d'électricité peut être utilisée dans une usine de production d'électricité. La source de rotation mécanique peut être par exemple une turbine pour une machine tournante génératrice 1 formée par un alternateur ou un turbo-alternateur. La source de rotation mécanique peut être un moteur électrique, c'est le cas d'un groupe motopompe primaire d'une centrale nucléaire de production d'électricité. La source de rotation mécanique peut être actionnée par une énergie hydraulique, par exemple dans une centrale hydraulique de production d'électricité. La source de rotation mécanique peut être une turbine à gaz de cycles combinés.

Dans un deuxième cas, la machine tournante 1 peut fonctionner en moteur, c'est-à-dire que le courant électrique variable envoyé depuis l'extérieur aux premiers bobinages électriques du stator 2 entraîne en rotation le rotor 3 autour de l'axe 30 par l'intermédiaire des éléments magnétiques et/ou deuxièmes bobinages électriques du rotor 3.

Sur le stator 2 est fixé un (ou plusieurs) capteur 4 de vibrations permettant de fournir des mesures de vibrations du rotor 3. Chaque capteur a une position déterminée sur le stator 2. Le ou les capteurs 4 permettent de mesurer les vibrations dans la direction radiale du rotor 3. Les capteurs 4 peuvent être répartis en différentes positions selon l'axe 30 de rotation et peuvent être alignés suivant une direction parallèle à l'axe 30 de rotation. Les capteurs 4 peuvent être répartis autour de l'axe 30 de rotation. Les vibrations mesurées peuvent être des déplacements, des vitesses ou des accélérations. Le capteur 4 de vibrations peut être un capteur de déplacements, un capteur d'accélération, un capteur de vitesse, ou autres. On note N le nombre de capteurs 4 de vibrations utilisés.

Le stator 2 comporte un (ou plusieurs) capteur 5 de position angulaire instantanée δ en rotation du rotor 3 autour de l'axe 30 de rotation par rapport au stator 2. Ce capteur 5 de position angulaire δ en rotation du rotor 3 peut mesurer le temps écoulé à partir d'une référence temporelle et peut utiliser la période T nécessaire au rotor 3 pour effectuer une rotation complète autour de l'axe 30, pour déterminer à chaque instant t la position angulaire instantanée δ du rotor 2 à partir de l'écart entre cet instant et cette période T, la position angulaire δ revenant par exemple à zéro à chaque période écoulée. Lorsque ce capteur 5 mesure la position angulaire du rotor, il est appelé multi-top-tour. Si le capteur 5 mesure uniquement les instants entre lesquels le rotor effectue une rotation complète, il est appelé « top-tour ». Le capteur 5 permet de faire le lien entre la phase des signaux de vibrations et la position angulaire du rotor 3. Le capteur 5 permet aussi de mesurer la période de rotation et par conséquent la vitesse de rotation du rotor.

Suivant l'invention, le stator 2 comporte une (ou plusieurs) tête 7 de traitement thermique, qui occupe une plage angulaire déterminée θ (non nulle) de moins de 360° autour de l'axe 30 de rotation en face du rotor 3. La tête 7 de traitement thermique est située à une distance prédéterminée et non nulle de la circonférence 31 du rotor 3. La tête 7 de traitement thermique peut être à distance ou à côté du ou des paliers 20 ou de toute partie du stator 2 entourant le rotor 3 autour de l'axe 30 de rotation. Le rotor 3 s'étend en longueur suivant l'axe 30 de rotation et peut avoir par exemple et d'une manière non limitative une longueur de plusieurs mètres. La tête 7 de traitement thermique est sans contact avec le rotor 3 et est face au rotor 3.

La machine 1 comporte un contrôleur 6 d'équilibrage du rotor 3 par la tête 7 de traitement thermique. Le capteur 4 de vibrations, le capteur 5 de position angulaire et la tête 7 de traitement thermique sont reliés au contrôleur 6. Le contrôleur 6 d'équilibrage du rotor 3 peut être ou comprendre un (ou plusieurs) calculateur 61, un (ou plusieurs) ordinateur, un (ou plusieurs) processeur, un (ou plusieurs) microprocesseurs, un (ou plusieurs) microcontrôleur, un (ou plusieurs) actionneur, une (ou plusieurs) mémoire permanente 62, une (ou plusieurs) mémoire non permanente 62, un (ou plusieurs) programme d'ordinateur.

L'invention est décrite ci-dessous en référence aux figures 1, 9 et 10 à 19.

La (ou les) tête 7 de traitement thermique est apte à appliquer au rotor 3 une puissance P de chauffe. La (ou les) tête 7 de traitement thermique est donc un tête 7 de chauffage sans contact.

Dans ce qui suit, étant donné que la (ou les) tête 7 de traitement thermique est une (ou plusieurs) tête 7 de chauffage, la puissance de chauffe ainsi que la position angulaire à laquelle le chauffage est appliqué sont représentées par un seul nombre complexe, dont le module est l'amplitude de chauffage (positive) appliquée par la (ou les) tête 7 de traitement thermique et dont l'argument est la position angulaire à laquelle l'amplitude de chauffage est appliquée par la (ou les) tête 7 de traitement thermique.

Le contrôleur 6 d'équilibrage du rotor 3 est configuré pour régler la puissance P de chauffe telle que P = *r · H · V e^{jβ} = Pₖ = r · Hₖ* · *Vₖ* · *e*^{j·(αₖ+βₖ})

La notation complexe de *P = Pₖ = r* · *Hₖ* · *Vₖ · e*^{j·(αₖ+βₖ}) signifie : appliquer un chauffage d'amplitude *rHVₖ* à la position angulaire *αₖ* + *βₖ*. Il s'agit d'une notation mathématique qui scinde deux informations dans le même nombre complexe : amplitude de chauffage et la position angulaire à laquelle on applique ce chauffage. En aucun cas, le chauffage ne devient négatif.
De manière équivalente : la notation complexe *P = rHVe^{jβ}* signifie : appliquer un chauffage dont l'amplitude est le produit de r, *H* et l'amplitude de la vibration *V.* Ce chauffage est à appliquer à la position angulaire donnée par la somme de l'angle *β* et de l'argument de*V.*

H et β sont deux paramètres de réglage de la puissance P de chauffe de la (ou des) tête 7 de traitement thermique.

H est un paramètre de réglage d'une amplitude du moment de flexion créé par la tête de traitement thermique 7 et est un réel supérieur ou égal à zéro et dont l'unité est le N.m/m (moment de flexion par unité de longueur). Le paramètre H de réglage de l'amplitude du moment de flexion créé par la tête de traitement thermique 7 est calculé par le contrôleur 6 d'équilibrage.

β est un paramètre de réglage d'une phase de la puissance P de chauffe. Le paramètre β de réglage de la phase de la puissance P de chauffe est calculé par le contrôleur 6 d'équilibrage.

r est un coefficient de sensibilité de flexion du rotor 3 à la puissance de chauffe appliquée par la tête 7 de traitement thermique et est préenregistré dans la mémoire 62 du contrôleur 6 d'équilibrage. Le coefficient de sensibilité de flexion du rotor 3 à la puissance de chauffe appliquée par la tête 7 de traitement thermique est prescrit au contrôleur 6 d'équilibrage. Ce coefficient r de sensibilité de flexion du rotor 3 peut être égal au rapport $r = \frac{{P}_{1}}{{M}_{1}}$ d'une valeur réelle P₁, déterminée et non nulle, de la puissance P de chauffe sur une valeur M₁ de moment de flexion du rotor 3, qui a été mesurée ou calculée et qui est provoquée par l'application de la valeur réelle P₁ de la puissance P de chauffe par la tête 7 de traitement thermique via le contrôleur 6 d'équilibrage au rotor 3. Bien entendu, le coefficient r de sensibilité de flexion du rotor 3 à la puissance de chauffe appliquée par la tête 7 de traitement thermique pourrait être différent de ce rapport et dépendre d'autres fonctions de P₁ et de de M₁.

V est une vibration du rotor 3, mesurée par le (ou les) capteur 4 de vibrations.

Le paramètre de réglage H de sensibilité de flexion du rotor 3 peut être calculé par le contrôleur 6 d'équilibrage de telle sorte que *r · H · Vₖ ≤ Pₘₐₓ*, où Pₘₐₓ est une valeur réelle maximum, positive et non nulle de la puissance P de chauffe. Bien entendu, le paramètre de réglage H de sensibilité de flexion du rotor 3 pourrait être autre.

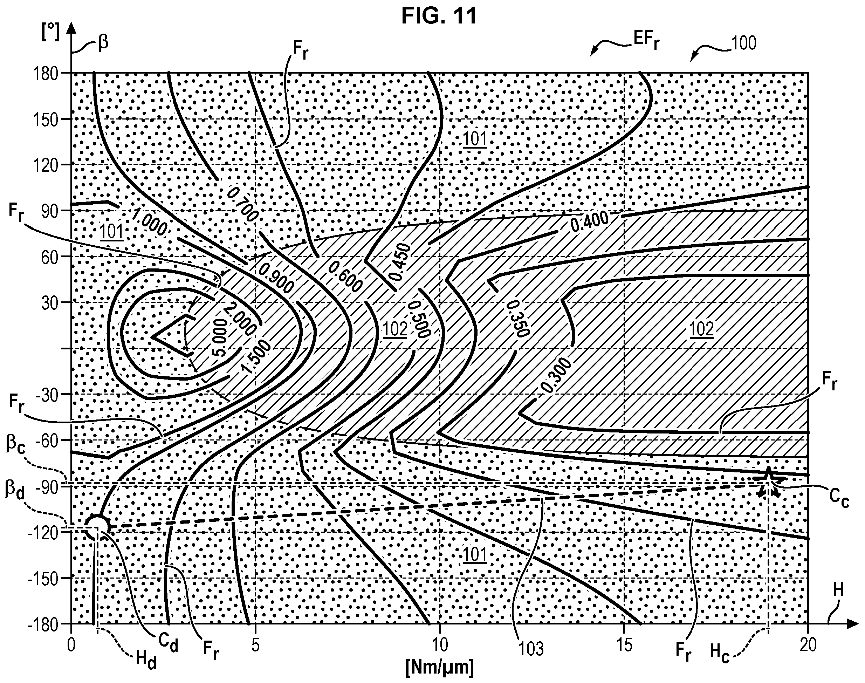

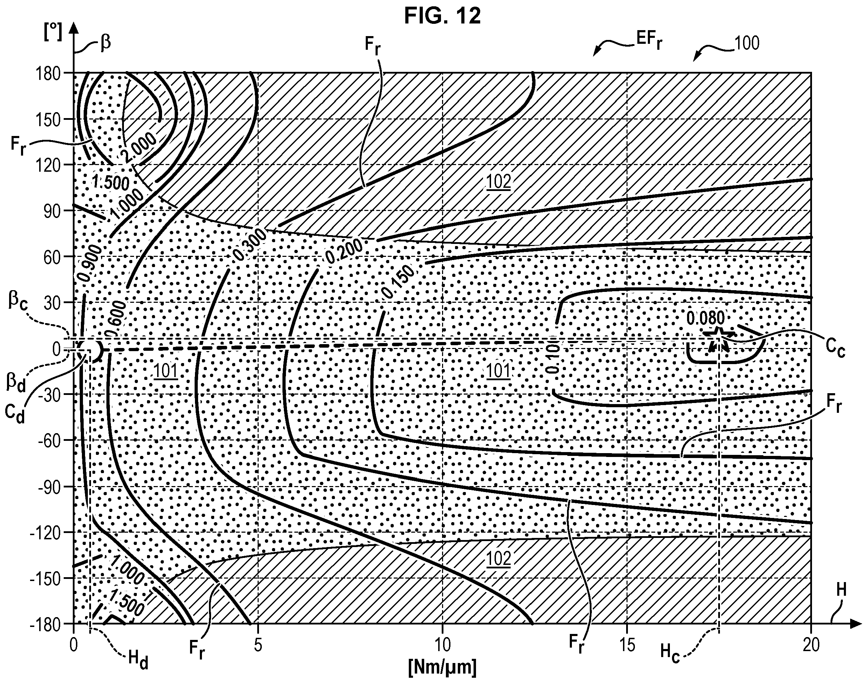

Ainsi que représenté à titre d'exemple aux figures 11 et 12, dans le contrôleur 6 d'équilibrage (dans la mémoire 62) est préenregistrée une (ou plusieurs) carte 100 prescrite de stabilité du rotor 3 pour une (ou plusieurs) vitesse de rotation déterminée du rotor 3 autour de l'axe 30 de rotation par rapport au stator 2 et pour une (ou plusieurs) position axiale de la tête de traitement thermique 7 le long de l'axe 30 de rotation. La carte 100 prescrite de stabilité comprend une (ou plusieurs) zone stable 101 pour des couples de valeurs de H et de β et une (ou plusieurs) zone instable 102 pour des couples de valeurs de H et de β. Par exemple, aux figures 11 et 12, la (ou les) zone stable 10 de la carte 100 de stabilité et la (ou les) zone instable 102 de la carte 100 de stabilité sont représentées en fonction des valeurs de H en abscisses et en fonction des valeurs de β en ordonnées (bien entendu, cela pourrait être également l'inverse). Une zone stable est une zone dans laquelle l'amplitude des vibrations converge vers une valeur constante. Une zone instable est une zone dans laquelle l'amplitude des vibrations augmente indéfiniment.

Dans la carte 100 de stabilité (dans la mémoire 62) est également préenregistré un facteur Fᵣ de réduction de vibration déterminé au moins dans la (ou les) zone stable 101 pour les couples de valeurs de H et de β. Le facteur Fᵣ de réduction de vibration est donc également un paramètre de la carte 100 de stabilité. Par exemple, aux figures 11 et 12, le facteur Fᵣ de réduction de vibration est représenté par des lignes de valeur constante (ou ligne de niveau) en fonction de certaines valeurs de H et de β. Il peut y avoir, ainsi que représenté aux figures 11 et 12, des lignes de valeur constante du facteur Fᵣ de réduction de vibration, qui sont situées en partie dans la zone stable 101 et en partie dans la zone instable 102 (comme montré aux figures 11 et 12), et/ou des lignes de valeur constante du facteur Fᵣ de réduction de vibration, qui sont situées entièrement dans la zone stable 101 (comme montré à la figure 12), et/ou des lignes de valeur constante du facteur Fᵣ de réduction de vibration, qui sont situées entièrement dans la zone instable 102 (comme montré à la figure 11). Il peut y avoir dans la carte prescrite 100 de stabilité, ainsi que représenté aux figures 11 et 12, des lignes de valeur constante du facteur Fᵣ de réduction de vibration, qui sont supérieures à un, une ligne de valeur constante du facteur Fᵣ de réduction de vibration égale à un, et des lignes de valeur constante du facteur Fᵣ de réduction de vibration, qui sont inférieures à un.

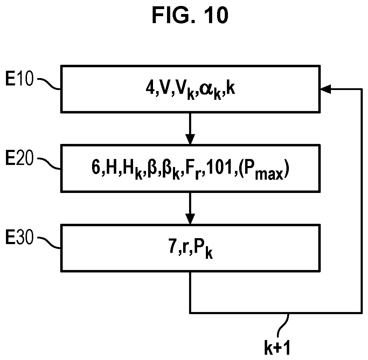

La figure 10 représente un organigramme du procédé d'équilibrage du rotor 3 de la machine tournante 1 suivant l'invention.

Le procédé d'équilibrage suivant l'invention comporte les étapes suivantes E10, E20, E30, qui sont effectuées à chaque itération k pendant la rotation du rotor 3 autour de l'axe 30 de rotation par rapport au stator 2 à la vitesse de rotation déterminée.

Au cours de la première étape E10 de chaque itération k, le (ou les) capteur 4 de vibrations mesure une amplitude Vₖ de la vibration V du rotor 3 et une phase αₖ de la vibration V du rotor 3 par rapport à une référence de phase selon l'équation *V = Vₖ* · *e^{j·αₖ}.*

Au cours d'une deuxième étape E20 postérieure à la première étape E10, le contrôleur 6 d'équilibrage identifie une valeur Hₖ du paramètre de réglage H et une valeur βₖ du paramètre de réglage B, qui définisse un point situé dans la zone stable 101 de la carte prescrite 100 de stabilité dans la ou l'une des zones stables 101 de la carte prescrite 100 de stabilité. Cette valeur Hₖ du paramètre de réglage H et cette valeur βₖ du paramètre de réglage β sont choisies par le contrôleur 6 d'équilibrage dans la zone stable 101 de la carte prescrite 100 de stabilité pour que le facteur Fᵣ de réduction de vibrations correspondant dans la carte prescrite 100 de stabilité, correspondant à cette valeur Hₖ du paramètre de réglage H et à cette valeur βₖ du paramètre de réglage B, soit plus petit que 1.

Au cours d'une troisième étape E30 postérieure à la deuxième étape E20, le contrôleur 6 d'équilibrage commande la tête 7 de traitement thermique pour que la tête 7 de traitement thermique envoie (sans contact) la puissance de chauffe *Pₖ = r · Hₖ · Vₖ* · *e*^{*j*·(α*ₖ*+β*ₖ*)} en présence de la vibration V mesurée par le capteur 4 de vibrations sur le rotor 3.

Cela permet d'injecter rapidement cette puissance Pₖ de chauffe au rotor 3 pour contrecarrer les vibrations, sans avoir à attendre que les vibrations se stabilisent. L'invention permet ainsi de résoudre le problème des vibrations qui seraient induites par l'effet Newkirk ou l'effet Morton.

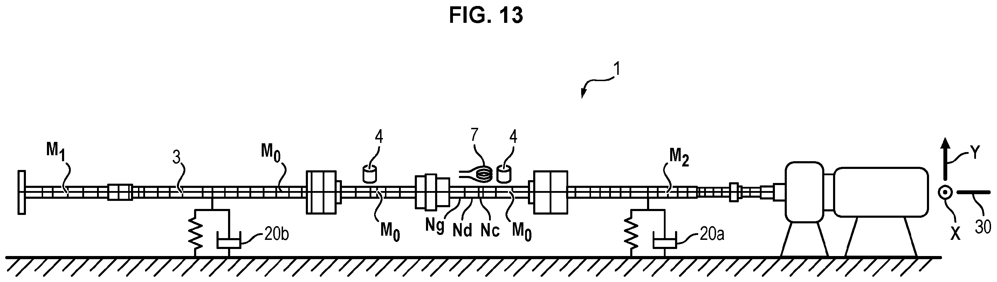

Dans des premiers et deuxième exemples d'application de l'invention, représentés à la figure 13, le rotor 3 est guidé en rotation autour de son axe 30 de rotation par rapport au stator 2 par deux (ou plus de deux) paliers 20a et 20b distants l'un de l'autre le long de l'axe 30 de rotation. Dans ces premiers et deuxième exemples, la tête de traitement thermique 7 et le capteur de vibration 4 sont placés entre les paliers 20a et 20b. Dans ces premiers et deuxième exemples, le rotor 3 de la machine 1 possède une masse M₁ en porte-à-faux à gauche du palier 20b de gauche, qui est inférieure à la masse intermédiaire M₀ du rotor 3 se trouvant entre le palier 20b de gauche et le palier 20a de droite. Dans ces premiers et deuxième exemples, le rotor 3 de la machine 1 possède une masse M₂ en porte-à-faux à droite du palier 20a de droite, qui est inférieure à la masse intermédiaire M₀ du rotor 3 se trouvant entre le palier 20b de gauche et le palier 20a de droite.

Dans le premier exemple où le rotor 3 tourne autour de l'axe 30 de rotation à une fréquence de rotation supérieure à une fréquence d'un premier mode de flexion du rotor 3 (ou fréquence critique), le contrôleur 6 d'équilibrage choisit la valeur βₖ = 0° du paramètre de réglage β lors de la deuxième étape E20. Ce premier exemple correspond par exemple à la figure 12. Dans l'exemple de la figure 12, la fréquence de rotation du rotor 3 est égale à 1500 tours par minute.

Dans le deuxième exemple où le rotor 3 tourne autour de l'axe 30 de rotation à une fréquence de rotation inférieure à une fréquence d'un premier mode de flexion du rotor 3 (ou fréquence critique), le contrôleur 6 d'équilibrage choisit la valeur βₖ = 180° du paramètre de réglage β lors de la deuxième étape E20. Ce deuxième exemple correspond par exemple à la figure 11. Dans l'exemple de la figure 11, la fréquence de rotation du rotor 3 est égale à 1200 tours par minute.

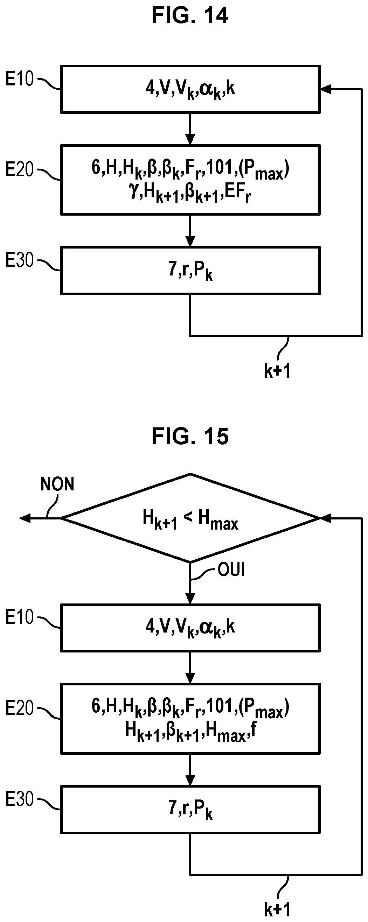

Dans un premier mode de réalisation de l'invention, représenté à la figure 14, les première, deuxième et troisième étapes E10, E20, E30 sont effectuées d'une manière itérative pour au moins une itération précédente k et au moins une itération suivante k+1, pour que, lors de la deuxième étape E20 de l'itération suivante k+1, le contrôleur 6 d'équilibrage règle la valeur Hₖ₊₁ du paramètre de réglage H telle que ${H}_{k + 1} = \frac{{γP}_{max}}{r ⋅ {V}_{k + 1}}$*.*

Vₖ₊₁ est l'amplitude de la vibration V du rotor 3, ayant été mesurée lors de la première étape E10 de l'itération suivante k+1.

*γ* est un facteur de réglage d'itération, qui est un réel strictement positif et inférieur ou égal à 1 et qui est préenregistré dans le contrôleur 6 d'équilibrage (mémoire 62). Le facteur *γ* de réglage d'itération est donc prescrit au contrôleur 6 d'équilibrage. Par exemple, le facteur *γ* de réglage d'itération peut être égal à 1. Bien entendu, le facteur γ de réglage d'itération peut être différent de 1.

Le contrôleur 6 d'équilibrage identifie, lors de la deuxième étape E20 de l'itération suivante k+1, la valeur *β*_{*k*+1} du paramètre de réglage β à partir de la carte 100 de stabilité prescrite et sélectionne la valeur la plus petite du facteur Fᵣ de réduction de vibrations parmi un ensemble fini EFᵣ de valeurs déterminées du facteur Fᵣ de réduction de vibrations. Cet ensemble fini EFᵣ de valeurs déterminées du facteur Fᵣ de réduction de vibrations a été préenregistré dans le contrôleur 6 d'équilibrage (mémoire 62). Cela permet d'avoir la baisse de vibration la plus rapide possible qu'il est possible d'atteindre avec la tête 7.de traitement thermique.

Dans un deuxième mode de réalisation de l'invention, représenté à la figure 15, les première, deuxième et troisième étapes E10, E20, E30 sont effectuées d'une manière itérative pour au moins une itération précédente k et au moins une itération suivante k+1 jusqu'à ce que la valeur Hₖ₊₁ du paramètre de réglage H de l'itération suivante k+1 atteigne un seuil prescrit Hₘₐₓ.

Lors de la deuxième étape E20 de l'itération suivante k+1, le contrôleur 6 d'équilibrage règle la valeur Hₖ₊₁ égale à une fonction f prescrite, cette fonction f étant croissante en fonction du temps jusqu'au seuil prescrit Hmax. Lors de la deuxième étape E20 de l'itération suivante k+1, le contrôleur 6 d'équilibrage règle la valeur βₖ₊₁ du paramètre de réglage β.

Lors de la troisième étape E30 de l'itération suivante k+1, le contrôleur 6 d'équilibrage commande la tête 7 de traitement thermique pour que la tête 7 de traitement thermique envoie (sans contact) la puissance de chauffe ${P}_{k + 1} = r ⋅ {H}_{k + 1} ⋅ {V}_{k + 1} ⋅ {e}^{j ⋅ \left({α}_{k + 1}+{β}_{k + 1}\right)}$ au rotor 3 en présence de la vibration V mesurée par le capteur 4 de vibrations. Vₖ₊₁ est l'amplitude de la vibration V du rotor 3, ayant été mesurée lors de la première étape E10 de l'itération suivante k+1.

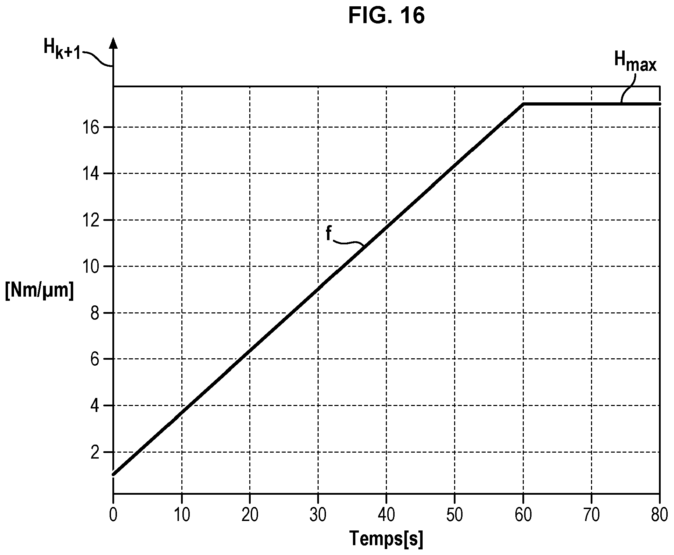

Par exemple, ainsi que représenté à la figure 16, la fonction croissante f prescrite est une rampe linéaire croissante en fonction du temps jusqu'au seuil prescrit Hₘₐₓ ou une rampe affine croissante en fonction du temps jusqu'au seuil prescrit Hₘₐₓ.

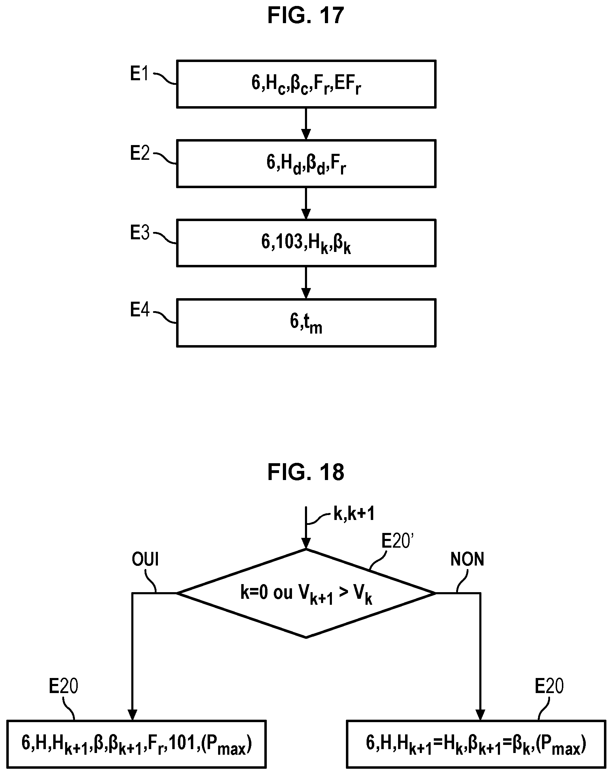

Dans un troisième mode de réalisation de la mention, représenté à la figure 17, le contrôleur 6 d'équilibrage effectue en outre les étapes suivantes E1, E2, E3 avant les première, deuxième et troisième étapes E10, E20, E30.

Au cours de l'étape E1, le contrôleur 6 d'équilibrage identifie dans la ou l'une des zones stables 101 de la carte prescrite 100 de stabilité un couple C_{c} d'une valeur cible H_{c} du paramètre de réglage H et d'une valeur cible β_{c} du paramètre de réglage B, qui donne la valeur la plus petite du facteur Fᵣ de réduction de vibration, strictement inférieure à 1, parmi un ensemble fini EFᵣ de valeurs déterminées du facteur Fᵣ de réduction de vibrations, ainsi que représenté à titre d'exemples aux figures 11 et 12.

Au cours de l'étape E2, le contrôleur 6 d'équilibrage identifie dans la ou l'une des zones stables 101 de la carte prescrite 100 de stabilité un couple C_{d} d'une valeur de départ H_{d} du paramètre de réglage H et d'une valeur de départ β_{d} du paramètre de réglage B, pour lequel le facteur Fᵣ de réduction de vibrations est strictement inférieur à 1, ainsi que représenté à titre d'exemples aux figures 11 et 12.

La valeur de départ H_{d} du paramètre de réglage H peut être par exemple inférieure à la valeur cible H_{c} du paramètre de réglage H. Cela permet de réduire la puissance nécessaire à réaliser l'équilibrage.

Au cours de l'étape E3, postérieures aux étapes E1 et E2, le contrôleur 6 d'équilibrage identifie dans la ou l'une des zones stables 101 de la carte prescrite 100 de stabilité un chemin 103 allant du couple C_{d} de départ de H_{d} et de β_{d} au couple C_{c} cible de H_{c} et de β_{c}, ce chemin 103 passant par les couples successifs des valeurs de Hₖ et de βₖ, qui sont situés dans la ou l'une des zones stables 101 de la carte prescrite 100 de stabilité, ainsi que représenté à titre d'exemples aux figures 11 et 12.

Les première, deuxième et troisième étapes E10, E20, E30 sont effectuées d'une manière itérative pour les couples successifs des valeurs de Hₖ et de βₖ de ce chemin 103 pour aller du couple C_{d} de départ de H_{d} et de β_{d} au couple C_{c} cible de H_{c} et de β_{c}.

Au cours d'une étape E4, le contrôleur 6 d'équilibrage peut en outre choisir une durée totale, non nulle, tₘ pour aller pour aller du couple C_{d} de départ de H_{d} et de β_{d} au couple C_{c} cible de H_{c} et de β_{c} par les couples successifs des valeurs de Hₖ et de βₖ.

Dans un quatrième mode de réalisation de la mention, représenté à la figure 18, les première, deuxième et troisième étapes E10, E20, E30 sont effectuées d'une manière itérative pour au moins une itération précédente k et au moins une itération suivante k+1. Le contrôleur 6 d'équilibrage examine lors des itérations si k=0 ou Vₖ₊₁ > Vk (étape E20' à la figure 18). Dans le cas où k=0 ou Vₖ₊₁ > Vₖ, (cas OUI à la figure 18), le contrôleur 6 d'équilibrage identifie lors de la deuxième étape E20 de l'itération suivante k+1 la valeur Hₖ₊₁ du paramètre de réglage H et la valeur *β*_{*k*+1} du paramètre de réglage B, qui sont situées dans la ou l'une des zones stables 101 de la carte prescrite 100 de stabilité. Dans le cas où k=0 ou Vₖ₊₁ > Vₖ ne sont pas vérifiés (cas NON à la figure 18), le contrôleur 6 d'équilibrage identifie lors de la deuxième étape E20 de l'itération suivante k+1 la valeur Hₖ₊₁ du paramètre de réglage H et la valeur *β*_{*k*+1} du paramètre de réglage β avec Hₖ₊₁= Hₖ et βₖ₊₁= βₖ.

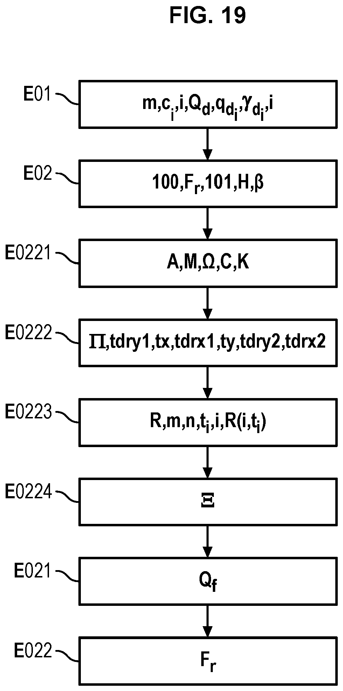

Dans un cinquième mode de réalisation de l'invention, représenté à la figure 19, la machine comporte m capteurs cᵢ de vibrations du rotor 3 (capteurs 4), qui sont montés sur le stator 2. L'entier naturel m est supérieur ou égal à 2 et i est un entier allant de 1 à m.

Le procédé comporte en outre les étapes suivantes, avant les première, deuxième et troisième étapes E10, E20, E30.

Au cours d'une première étape préparatoire E01, les m capteurs cᵢ de vibrations mesurent le vecteur complexe de mesure de vibrations ${Q}_{d} = {\left\{{q}_{{d}_{i}}{e}^{{jγ}_{{d}_{i}}}\right\}}^{T}$ pour i allant de 1 à m. Le capteur cᵢ de vibrations mesure la vibration ${q}_{{d}_{i}} {e}^{{jγ}_{{d}_{i}}}$ formant la composante i de ce vecteur Q_{d} mesurée, où l'amplitude *q_{dᵢ}* des vibrations du rotor 3 est mesurée respectivement par le capteur cᵢ de vibrations et la phase *γ_{dᵢ}* des vibrations du rotor 3 est mesurée respectivement par le capteur cᵢ de vibrations.

Au cours d'une deuxième étape préparatoire E02, le contrôleur 6 d'équilibrage calcule la carte 100 prescrite de stabilité en association avec des valeurs du facteur Fᵣ de réduction de vibrations en répétant les sous-étapes suivantes E021, E022 pour chaque valeur de H et de *β* se trouvant dans la zone stable 101 de la carte 100 de stabilité.

Lors de la sous-étape E021, le contrôleur 6 d'équilibrage calcule le vecteur *Q_{f}* solution du système d'équations : $Ξ ⋅ {Q}_{f} = {Q}_{d}$ avec ${Q}_{f} = {\left\{{q}_{{f}_{i}}{e}^{{jγ}_{{f}_{i}}}\right\}}^{T}$ pour i allant de 1 à m.

Lors de la sous-étape E022, le contrôleur 6 d'équilibrage calcule les valeurs Fᵣ(H, B) du facteur Fᵣ de réduction de vibrations telles que ${F}_{r} \left(H, β\right) = max \left({\left\{\frac{{q}_{{f}_{i}}}{{q}_{{d}_{i}}}\right\}}_{i ∈ \left[1, m\right]}\right)$

Préalablement à la sous-étape E021, le contrôleur 6 d'équilibrage calcule la matrice Ξ de la sous-étape E021 en effectuant les autres étapes suivantes E0221, E0222, E0223 et E0224.

Lors de l'étape E0221, le contrôleur 6 d'équilibrage calcule une première matrice A telle que *A* = *-M · Ω*² + *j ·* Ω*· C* + *K.*

Ainsi que représenté à titre d'exemple à la figure 13, le contrôleur 6 d'équilibrage calcule un modèle à éléments finis représentant la machine 1, dans lequel la tête 7 de traitement thermique se trouve entre un nœud Ng d'un maillage de la machine 1 et un nœud Nd du maillage de la machine 1 et dans lequel le capteur 4 de vibration se trouve en face d'un nœud Nc du maillage de la machine 1.

M est une matrice prescrite de masse du modèle à éléments finis de la machine 1 et est préenregistrée dans le contrôleur 6 d'équilibrage (mémoire 62). Le modèle peut être à éléments finis monodimensionnels suivant l'axe 30 de rotation, ainsi que représenté par exemple à la figure 13.

C est une matrice prescrite d'amortissement du modèle à éléments finis de la machine 1 et est préenregistrée dans le contrôleur 6 d'équilibrage (mémoire 62).

K étant une matrice prescrite de rigidité du modèle à éléments finis de la machine 1 et est préenregistrée dans le contrôleur 6 d'équilibrage (mémoire 62).

Ω est la vitesse de rotation, et peut être soit prescrite, soit mesurée par le capteur 5.

Lors de l'étape E0222, le contrôleur 6 d'équilibrage calcule une deuxième matrice Π de liaison de degrés de liberté, la matrice Π ayant les valeurs suivantes :
--- valeur 1 à sa ligne tdry1, colonne tx,
--- valeur j à sa ligne tdry1, colonne ty,
--- valeur j à sa ligne tdrx1, colonnne tx,
--- valeur -1 à sa ligne tdrx1, colonne ty,
--- valeur -1 à sa ligne tdry2, colonne tx,
--- valeur -j à sa ligne tdry2, colonne ty,
--- valeur -j à sa ligne tdrx2, colonnne tx,
--- valeur 1 à sa ligne tdrx2, colonne ty,
--- 0 ailleurs,
où j est le nombre complexe racine carrée de -1. La matrice Π est une matrice creuse (du fait de la présence des 0).

X est une première direction perpendiculaire à l'axe 30 de rotation.

Y est une deuxième direction perpendiculaire à la première direction X et à l'axe 30 de rotation.

tx est l'indice du degré de liberté de déplacement en translation suivant la direction X du nœud Nc,
ty est l'indice du degré de liberté de déplacement en translation suivant la direction Y du nœud Nc,
tdrx1 est l'indice du degré de liberté de déplacement en rotation autour de la direction X du nœud Ng,
tdry1 est l'indice du degré de liberté de déplacement en rotation autour de la direction Y du nœud Ng,
tdrx2 est l'indice du degré de liberté de déplacement en rotation autour de la direction X du nœud Nd,
tdry2 est l'indice du degré de liberté de déplacement en de déplacement en rotation autour de la direction Y du nœud Nd.

Lors de l'étape E0223, le contrôleur 6 d'équilibrage calcule une troisième matrice R de passage, ayant m lignes et n colonnes, où
i est l'indice pour les lignes de la matrice R, ainsi que respectivement pour les capteurs cᵢ de vibrations du rotor 3 et va de 1 à m,
n est le nombre de degrés de liberté du modèle à élément finis,
tᵢ est l'indice pour les colonnes de la matrice R, ainsi que pour les degrés de libertés de déplacement correspondant à respectivement les capteurs cᵢ de vibrations du rotor 3 pour i allant de 1 à m. D'une manière générale, R est la matrice du passage qui fait correspondre les valeurs du modèle numérique à celles mesurées par les capteurs de vibration.

Le contrôleur 6 d'équilibrage calcule la troisième matrice R de passage ayant les valeurs suivantes :
R(i, tᵢ)=1 pour i allant de 1 à m,
0 ailleurs. La matrice R est une matrice creuse (du fait de la présence des 0).

Lors de l'étape E0224, le contrôleur 6 d'équilibrage calcule la matrice Ξ , ayant m lignes et n colonnes, où $Ξ = R ⋅ \left(I-H⋅{e}^{jβ}⋅{A}^{- 1}⋅Π\right) ,$ *A*⁻¹ étant la matrice inverse, ayant été calculée contrôleur 6 d'équilibrage, de la matrice A.
I est la matrice identité.

Suivant un mode de réalisation de l'invention, la carte 100 de stabilité est prédéterminée par le contrôleur 6 d'équilibrage à l'aide du modèle à éléments finis. Le contrôleur 6 d'équilibrage peut calculer la carte 100 de stabilité de la manière suivante.

Pour chaque couple de valeur H et β, le contrôleur 6 d'équilibrage calcule les valeurs propres v de la quatrième matrice ψ mentionnée ci-dessous : $Ψ = \left(H⋅{e}^{jβ}⋅{A}^{- 1}⋅Π-I\right)$ où *I* est la matrice identité de la même taille que A. Les matrives A et Π ont déjà été définies plus haut.

Si les valeurs réelles 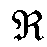 de toutes les valeurs propres v de la quatrième matrice Ψ sont strictement négatives, alors le couple H, β est dit stable et se trouve dans la zone 101 stable. Mathématiquement, la condition de stabilité s'écrit : $max \left.\left\{ℜ\left(ν\right) tel que det\left(Ψ-ν⋅I\right)=0\right\}<0\right\}$ où det désigne le déterminant, max désigne le maximum, .

Si cette condition n'est pas remplie, alors le couple H, β est dit instable et se trouve dans la zone 102 instable.

L'invention concerne également la machine tournante 1 comportant le stator 2 muni du (ou des) capteur de vibrations 4, le rotor 3 décrit ci-dessus, la tête 7 de traitement thermique décrite ci-dessus, le (ou les) capteur 5 de position angulaire décrit ci-dessus et le contrôleur 6 d'équilibrage configuré pour mettre en œuvre les étapes décrites ci-dessus.

L'invention concerne également un programme d'ordinateur comportant des instructions de code pour la mise en œuvre au moins les deuxième et troisième étapes E20, E30 du procédé d'équilibrage du rotor 3 de la machine tournante 1 telle que décrit ci-dessus, lorsque le programme d'ordinateur est exécuté sur le contrôleur 6 d'équilibrage décrit ci-dessus.

Dans un sixième mode de réalisation, non représenté, le facteur Fᵣ de réduction de vibration peut être déterminé d'une autre manière que le cinquième mode de réalisation. Par exemple, le contrôleur 6 d'équilibrage peut calculer le facteur Fᵣ de réduction de vibration de la carte prescrite 100 de stabilité en mesurant par le capteur 5 la première amplitude Q_{eq} des vibrations V obtenues pour chaque puissance de chauffe P mentionnée ci-dessus (c'est-à-dire pour chaque couple de H et de β réglé par le contrôleur 6 d'équilibrage sur la tête 7 de traitement thermique) pendant la rotation du rotor 3, et en divisant cette première amplitude Q_{eq} par la deuxième amplitude Q₀ des vibrations V mesurées par le capteur 5 en l'absence de cette puissance P de chauffe pendant la rotation du rotor 3, c'est-à-dire Fᵣ= Q_{eq}/Q₀.

Le troisième mode de réalisation peut être combiné avec le premier mode de réalisation ou avec le deuxième mode de réalisation.

Le quatrième mode de réalisation peut être combiné avec le premier mode de réalisation ou avec le deuxième mode de réalisation ou avec le troisième mode de réalisation.

Le cinquième mode de réalisation peut être combiné avec le premier mode de réalisation ou avec le deuxième mode de réalisation ou avec le troisième mode de réalisation ou avec le quatrième mode de réalisation.

Le sixième mode de réalisation peut être combiné avec le premier mode de réalisation ou avec le deuxième mode de réalisation ou avec le troisième mode de réalisation ou avec le quatrième mode de réalisation.

On décrit ci-dessous d'autres modes de réalisation pouvant être combinés à chacun des modes de réalisation et exemples décrits ci-dessus.

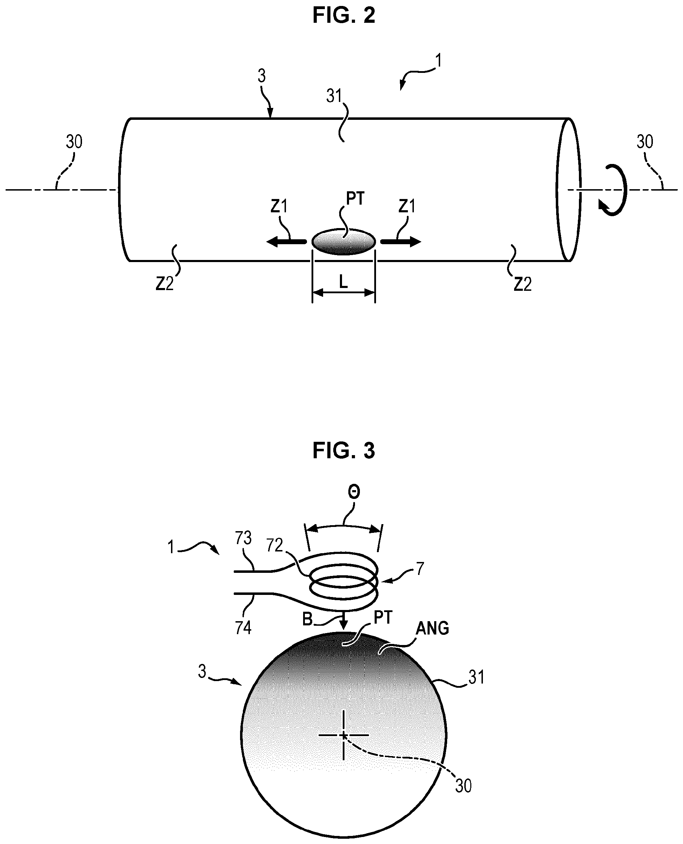

Suivant un mode de réalisation de l'invention, représenté à la figure 3, la tête 7 de traitement thermique est configurée pour appliquer la puissance de chauffe sur une partie PT de la circonférence 31 du rotor 3, située en face de plage angulaire déterminée θ au cours de la rotation du rotor 2 autour de l'axe 30, ainsi que représenté à titre d'exemple à la figure 2. La plage angulaire θ déterminée peut être relativement étroite. Suivant un mode de réalisation, la plage angulaire θ déterminée peut être inférieure ou égale à 180° ou à 90°, notamment inférieure ou égale à 45°, ou inférieure ou égale à 20°, ou inférieure ou égale à 5°, ou inférieure ou égale à 1°. La plage angulaire θ déterminée est supérieure à 0°, notamment supérieure ou égale à 0.1° ou à 0.5°.

Suivant un mode de réalisation de l'invention, représenté à la figure 2, la tête 7 de traitement thermique occupe une longueur déterminée L (non nulle) parallèlement à l'axe 30 de rotation en face du rotor 3 et est apte à appliquer dans la longueur déterminée L la puissance de chauffe au rotor 3 sans contact avec le rotor 3. La longueur déterminée L est supérieure à zéro et par exemples supérieure à 5 mm.

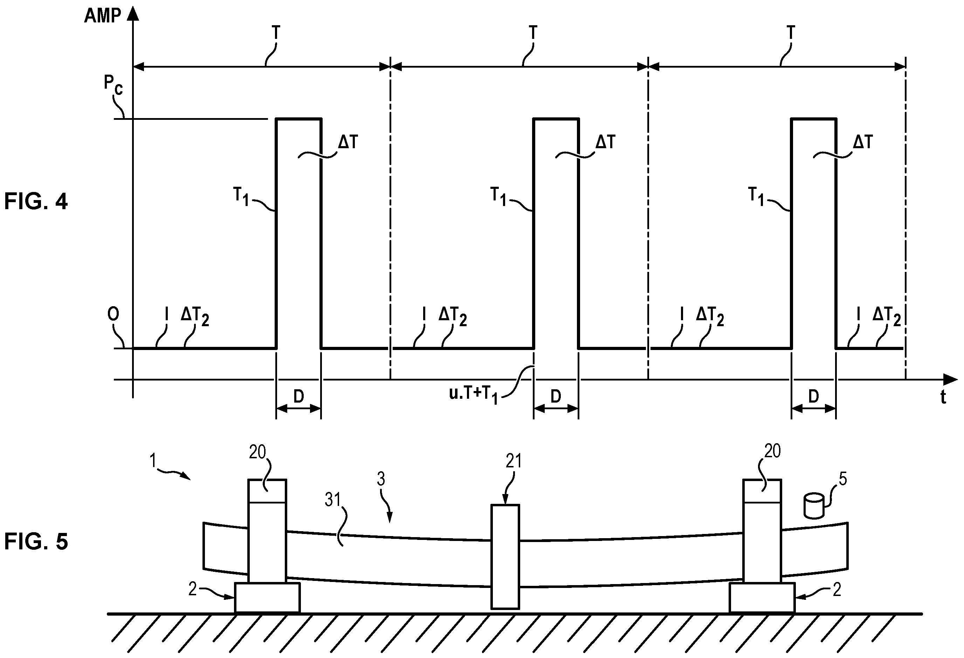

Suivant un mode de réalisation de l'invention, représenté à la figure 4, le contrôleur 6 d'équilibrage du rotor 3 est configuré pour régler au moins un instant T₁ d'activation de la puissance de chauffe sans contact de la tête 7 de traitement thermique et/ou au moins une durée D d'activation de la puissance de chauffe sans contact de la tête 7 de traitement thermique à partir de l'instant T₁ d'activation et/ou une amplitude P_{c} de la puissance de chauffe de la tête 7 de traitement thermique en fonction au moins de la position angulaire instantanée δ ayant été mesurée par le capteur 5 de position angulaire du rotor 3. Le contrôleur 6 d'équilibrage du rotor 3 peut commander par un signal impulsionnel de commande la tête 7 de traitement thermique. L'amplitude P_{c} de la puissance de chauffe peut être de forme impulsionnelle en fonction du temps t, ainsi qu'illustré à titre d'exemple à la figure 4.

Suivant un mode de réalisation, le contrôleur 6 d'équilibrage permet de régler la durée D d'activation de la puissance de chauffe vers le rotor 3 au cours de chaque période T de rotation du rotor 3 autour de l'axe 30. La tête 7 commandée par le contrôleur applique donc dans la plage angulaire déterminée θ et pendant la durée D d'activation la puissance de chauffe à la circonférence 31 du rotor 3. Le contrôleur 7 commande donc la tête 7 de traitement thermique pour appliquer la puissance de chauffe sur une zone localisée PT de la circonférence 31 du rotor 3. Le contrôleur 6, à partir de l'analyse des vibrations enregistrées par le ou les capteurs 4 de vibrations, calcule la puissance de chauffe, sa durée D, ainsi que le secteur angulaire ANG du rotor 3 où la puissance de chauffe est à appliquer.

Par exemple, ainsi qu'illustré à la figure 4, la durée D d'activation de l'amplitude P_{c} non nulle de la puissance de chauffe sans contact de la tête 7 de traitement thermique à partir de l'instant T₁ d'activation est inférieure à la période T de rotation du rotor 3 pour effectuer un tour de 360° autour de l'axe 30 de rotation par rapport au stator 2. La figure 4 montre l'amplitude AMP du traitement thermique envoyé par la tête 7 en ordonnées en fonction du temps t en abscisses. Ainsi, dans l'exemple de la figure 4, la durée D d'activation de la puissance de chauffe sans contact de la tête 7 de traitement thermique à l'amplitude P_{c} non nulle à partir de l'instant T₁ d'activation est suivie ou précédée lors de la période T de rotation d'une durée I d'inactivation de la tête 7 pour ne pas appliquer de puissance de chauffe au rotor 3 à l'amplitude zéro ou d'une durée I d'application d'un deuxième puissance de chauffe ΔT₂ ayant une amplitude inférieure à l'amplitude P_{c} de durée D. Le contrôleur 6 d'équilibrage peut être configuré pour effectuer une modulation par largeur d'impulsions de la puissance de chauffe.

Suivant un mode de réalisation de l'invention, la tête 7 de traitement thermique permet donc de traiter thermiquement un secteur angulaire ANG, déterminé et inférieur à 360°, de la circonférence 31 du rotor 3 en rotation autour de l'axe 30, en ayant la durée D inférieure à la période T de rotation du rotor 3, la période T de rotation étant le temps mis par le rotor 3 pour effectuer un tour de 360° autour de l'axe 30 de rotation. Par exemple, l'instant T₁ d'activation de la puissance de chauffe sans contact de la tête 7 de traitement thermique est périodique avec la même période que la période T de rotation et/ou la durée D d'activation de la puissance de chauffe sans contact de la tête 7 de traitement thermique à partir de l'instant T₁ d'activation est périodique avec la même période que la période T de rotation. Ce secteur angulaire ANG du rotor 3 correspond dans ces cas à la durée D d'activation de la puissance de chauffe sans contact de la tête 7 de traitement thermique à partir de l'instant T₁ d'activation, s'étend sur ANG = 360° .D/T, en commençant à la position angulaire du rotor 360°.T₁/T laquelle correspond à l'instant u.T+T₁ après le début u.T de chaque période T de rotation, où u est un entier naturel. Cela permet de traiter toujours le même secteur angulaire ANG de la circonférence 31 du rotor 2 par la tête 7 au cours des rotations successives du rotor 3 autour de l'axe 30. Bien entendu, dans d'autres modes de réalisation, l'instant T₁ et la durée D pourraient ne pas être périodiques.

Suivant un mode de réalisation de l'invention, la tête 7 de traitement thermique est une tête 7 de chauffage sans contact. Dans ce cas, la tête 7 accroît la température de la circonférence 31 du rotor 3 dans la plage angulaire déterminée θ, et la puissance de chauffe (alors appelé point chaud) dans la partie PT de la circonférence 31 du rotor 3 (secteur angulaire ANG) est positif et non nul. La tête 7 de traitement thermique envoie donc de la chaleur dans la plage angulaire déterminée θ et dans la partie PT (secteur angulaire ANG) de la circonférence 31 du rotor 3. Dans l'exemple illustré à la figure 2, la partie PT située en face de la tête 7 de chauffage sans contact est chauffée par cette tête 7 de chauffage sans contact et est la zone PT la plus chaude de la circonférence 31 du rotor 3. Les fibres de la matière constituant le rotor 3 dans les zones Z1 situées à proximité de cette partie PT chauffée par la tête 7 de chauffage vont se dilater davantage que les zones Z2 éloignées de la partie PT chauffée par la tête 7 de chauffage sur le rotor 3. La matière du rotor 3 dans les zones Z1 aura donc tendance à se déplacer davantage que la matière du rotor 3 dans les zones Z2 en s'éloignant du point de chauffe PT situé en face de la tête 7 de chauffage, créant ainsi une tension des parties Z1 proches de la zone PT de chauffe. Cette mise en tension n'est pas homogène suivant la circonférence 31 du rotor 3 et va donc entrainer une flexion du rotor 3 comme illustré sur la figure 5. La flexion ainsi créée va générer une nouvelle répartition de la masse autour de l'axe 30 du rotor 3. En contrôlant l'amplitude P_{c} et la position angulaire ANG de la portion chauffée PT, il est possible de modifier la répartition de la masse autour de l'axe 30 de rotation et ainsi de générer des efforts dynamiques permettant de s'opposer aux efforts générés par les défauts du rotor 3. Le chauffage du rotor 3 s'effectue sans aucun contact et de manière non intrusive. Si le système est utilisé pour corriger un déséquilibre de masse du rotor 3, alors la correction est réalisée sans jamais devoir arrêter la rotation du rotor 3, et sans avoir à modifier la rotation du rotor. La correction peut s'adapter à la vitesse de rotation du rotor 3 autour de l'axe 30 et à l'apparition de nouveaux déséquilibres qui seraient créés par d'autres phénomènes, par exemple l'érosion par cavitation, l'effet Newkirk ou l'effet Morton.

Différents modes de réalisation de cette tête 7 de chauffage sans contact sont donnés ci-dessous, en référence aux figures 3, 6, 7, 8 et 9.

Suivant un mode de réalisation de l'invention, illustré à la figure 3, la tête 7 de traitement thermique est une tête 7 d'émission d'une induction magnétique chauffante dans la plage angulaire déterminée θ vers le rotor 3 et sans contact avec le rotor 3. La tête 7 de traitement thermique comporte une (ou plusieurs) bobines 71 ou inductances 71. La bobine 71 ou inductance 71 est configurée pour générer un champ magnétique B, par exemple radial par rapport à l'axe 30 de rotation, dans la plage angulaire déterminée θ, lorsque la bobine 71 ou inductance 71 est traversée par un courant électrique envoyé par une source de courant électrique du contrôleur 6 aux deux extrémités 73 et 74 de la bobine 71 ou inductance 71. Ce champ magnétique B permet de chauffer la partie PT de la circonférence 31 du rotor 3 en rotation autour de l'axe 30. La bobine 71 ou inductance 71 comporte par exemple une ou plusieurs spires 72 entre les deux extrémités 73 et 74. L'axe autour duquel la bobine 71 ou inductance 71 ou spire 72 est enroulé est normal ou possède une composante normale à la surface 31 du rotor 3.

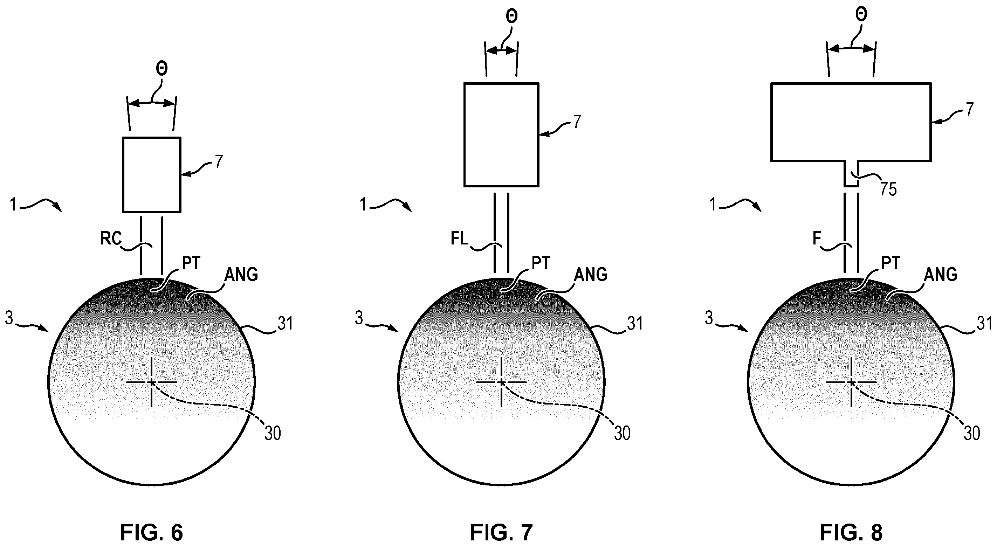

Suivant un mode de réalisation de l'invention, illustré à la figure 6, la tête 7 de traitement thermique est une tête 7 d'émission d'un rayonnement RC chauffant dans la plage angulaire déterminée θ vers le rotor 3 et sans contact avec le rotor 3. Le rayonnement RC touche la partie PT de la circonférence 31 du rotor 3 en rotation autour de l'axe 30. La tête 7 d'émission du rayonnement RC est sans contact avec le rotor 3.

Suivant un autre mode de réalisation de l'invention, illustré à la figure 7, la tête 7 de traitement thermique est une tête 7 d'émission d'un faisceau laser FL chauffant dans la plage angulaire déterminée θ vers le rotor 3. Le faisceau laser FL touche la partie PT de la circonférence 31 du rotor 3 en rotation autour de l'axe 30. La tête 7 d'émission du faisceau laser FL est sans contact avec le rotor 3.

Suivant un mode de réalisation de l'invention, la machine 1 comporte une seule tête 7 de traitement thermique, un seul capteur 4 de vibrations du rotor et un seul capteur 5 de position angulaire du rotor 3.

Suivant un autre mode de réalisation de l'invention, la machine 1 comporte plusieurs têtes 7 de traitement thermique, qui sont montées sur le stator 2.

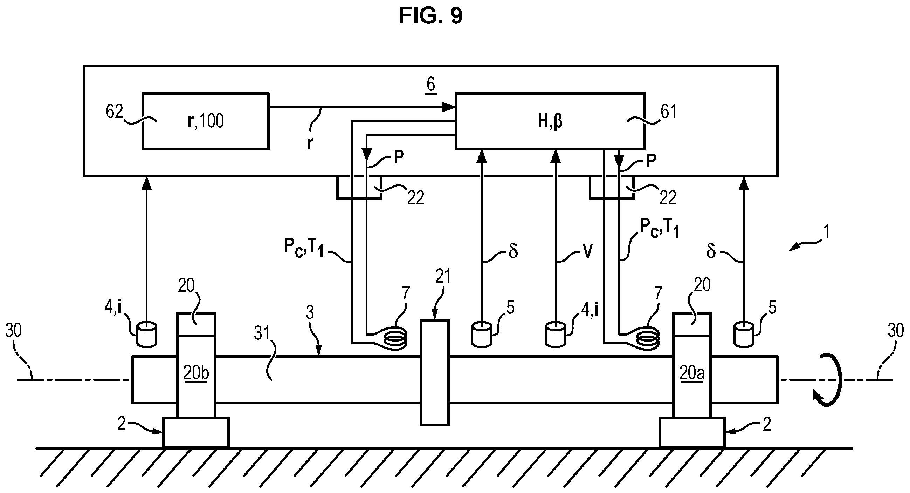

Suivant un mode de réalisation de l'invention, illustré à la figure 9, sur le stator 2 est monté un dispositif 22 de déplacement pour déplacer la tête 7 de traitement thermique suivant l'axe 30 de rotation et/ou autour de l'axe 30 de rotation. Le dispositif 22 de déplacement permet de déplacer le long de l'axe 30 de rotation la partie PT de la circonférence 31 du rotor 3 (secteur angulaire ANG), à laquelle la tête 7 de traitement thermique applique la puissance de chauffe sans contact, par exemple pour rapprocher cette partie PT d'une masse en porte-à-faux du rotor 3.

## Revendications

1. Procédé d'équilibrage du rotor d'une machine tournante (1), la machine tournante (1) comportant un stator (2), le rotor (3) étant apte à tourner autour d'un axe (30) de rotation par rapport au stator (2),
la machine tournante (1) comportant
au moins un capteur (4) de vibrations du rotor (3), le capteur (4) de vibrations étant monté sur le stator (2),
au moins une tête (7) de traitement thermique, qui occupe une plage angulaire déterminée (θ) de moins de 360° autour de l'axe (30) de rotation en face du rotor (3), qui est sans contact avec le rotor (3) et qui est apte à appliquer au rotor (3) sans contact avec le rotor (3) dans la plage angulaire (θ) déterminée une puissance de chauffe, étant montée sur le stator (2),
au moins un capteur de position angulaire en rotation du rotor (3) autour de l'axe (30) de rotation par rapport au stator (2) étant monté sur le stator (2),
la machine comportant un contrôleur (6) d'équilibrage du rotor (3),
**caractérisée en ce que**
la puissance de chauffe étant un nombre complexe ayant un module positif représentant une amplitude de chauffage appliquée par la au moins une tête (7) de traitement thermique, le nombre complexe ayant un argument représentant une position angulaire à laquelle l'amplitude de chauffage est appliquée par la au moins une tête (7) de traitement thermique dans la plage angulaire déterminée (θ),
le contrôleur (6) d'équilibrage du rotor (3) est apte à régler la puissance de chauffe $P = r ⋅ H ⋅ V {e}^{jβ}$
où H est un paramètre de réglage d'une amplitude d'un moment de flexion du rotor (3), créé par la tête de traitement thermique (7), et est un réel supérieur ou égal à zéro,
B est un paramètre de réglage d'une phase de la puissance de chauffe,
r est un coefficient de sensibilité de flexion du rotor (3) à la puissance de chauffe appliquée par la tête (7) de traitement thermique, le coefficient r de sensibilité étant préenregistré dans le contrôleur (6) d'équilibrage,
au moins une carte (100) prescrite de stabilité du rotor (3) pour au moins une vitesse de rotation déterminée du rotor (3) autour de l'axe (30) de rotation par rapport au stator (2) et pour au moins une position axiale de la tête de traitement thermique (7), étant préenregistrée dans le contrôleur (6) d'équilibrage et indiquant au moins une zone stable (101) et au moins une zone instable (102) pour des couples de valeurs de H et de β, la carte (100) de stabilité étant paramétrée par un facteur Fᵣ de réduction de vibrations déterminé au moins dans la zone stable (101),
le procédé comportant au moins les étapes suivantes (E10, E20, E30), effectuées d'une manière itérative pendant la rotation du rotor (3) autour de l'axe (30) de rotation par rapport au stator (2) à la vitesse de rotation déterminée, pour, à chaque itération k :
au cours d'une première étape (E10), mesurer, par le capteur (4) de vibrations, une amplitude Vₖ d'une vibration V du rotor (3) et une phase αₖ de la vibration V du rotor (3) par rapport à une référence de phase selon l'équation *V* = *Vₖ* · *e^{j·αₖ},*
au cours d'une deuxième étape (E20), identifier une valeur Hₖ du paramètre de réglage H et une valeur βₖ du paramètre de réglage B, qui sont situées dans la zone stable de la carte prescrite (100) de stabilité et pour lesquelles *Fᵣ <* 1, par le contrôleur (6) d'équilibrage,
au cours d'une troisième étape (E30), appliquer la puissance de chauffe *Pₖ = r · Hₖ* · *Vₖ · e*^{*j*·(α*ₖ*+β*ₖ*)} par la tête (7) de traitement thermique via le contrôleur (6) d'équilibrage au rotor (3) et en présence de la vibration V mesurée par le capteur (4) de vibrations.

2. Procédé suivant la revendication 1, **caractérisé en ce que** le coefficient r de sensibilité de flexion du rotor (3) à la puissance de chauffe appliquée par la tête (7) de traitement thermique est prescrit dans le contrôleur (6) d'équilibrage comme étant égal au rapport ( $r = \frac{{P}_{1}}{{M}_{1}}$) d'une valeur réelle P₁, déterminée et non nulle, de la puissance de chauffe sur une valeur (M₁) de moment de flexion du rotor (3) mesurée ou calculée, provoquée par l'application de la valeur réelle (P₁) de la puissance de chauffe par la tête (7) de traitement thermique via le contrôleur (6) d'équilibrage au rotor (3).

3. Procédé suivant l'une quelconque des revendications précédentes, **caractérisé en ce que** *r · H · Vₖ* ≤ *Pₘₐₓ*
où Pₘₐₓ est une valeur réelle maximum, positive et non nulle de la puissance de chauffe.

4. Procédé suivant l'une quelconque des revendications 1 à 3, **caractérisé en ce que** le rotor (3) est guidé en rotation autour de son axe (30) de rotation par rapport au stator (2) par au moins deux paliers (20a, 20b) distants l'un de l'autre le long de l'axe (30) de rotation, la tête de traitement thermique (7) et le capteur de vibration (4) étant placés entre les paliers (20a, 20b),
βₖ = 0° pour la machine (1) dont le rotor (3) possède une masse (M₁, M₂) en porte-à-faux de l'un des paliers (20a, 20b), qui est inférieure à une masse intermédiaire (M₀) du rotor (3) se trouvant entre les paliers (20a, 20b) et pour la machine (1) opérant à une fréquence de rotation du rotor (3), qui est supérieure à une fréquence d'un premier mode de flexion du rotor (3).

5. Procédé suivant l'une quelconque des revendications 1 à 3, **caractérisé en ce que** le rotor (3) est guidé en rotation autour de son axe (30) de rotation par rapport au stator (2) par au moins deux paliers (20a, 20b) distants l'un de l'autre le long de l'axe (30) de rotation, la tête de traitement thermique (7) et le capteur de vibration (4) étant placés entre les paliers (20a, 20b),
βₖ = 180° pour la machine (1) dont le rotor (3) possède une masse (M₁, M₂) en porte-à-faux de l'un des paliers (20a, 20b), qui est inférieure à une masse intermédiaire (M₀) du rotor (3) se trouvant entre les paliers (20a, 20b) et pour la machine (1) opérant à une fréquence de rotation du rotor (3), qui est inférieure à une fréquence d'un premier mode de flexion du rotor (3).

6. Procédé suivant l'une quelconque des revendications 1 à 5, **caractérisé en ce que** les première, deuxième et troisième étapes (E10, E20, E30) sont effectuées d'une manière itérative pour au moins une itération précédente k et au moins une itération suivante k+1, pour, lors de la deuxième étape (E20) de l'itération suivante k+1 :
régler par le contrôleur (6) d'équilibrage la valeur Hₖ₊₁ du paramètre de réglage H tel que ${H}_{k + 1} = \frac{{γP}_{max}}{r ⋅ {V}_{k + 1}}$,
où
Vₖ₊₁ est l'amplitude de la vibration V du rotor (3), ayant été mesurée lors de la première étape (E10) de l'itération suivante k+1,
*γ* est un facteur de réglage d'itération, qui est un réel strictement positif et inférieur ou égal à 1 et qui est préenregistré dans le contrôleur (6) d'équilibrage,
et identifier par le contrôleur (6) d'équilibrage la valeur *β*_{*k*+1} du paramètre de réglage β à partir de la carte (100) de stabilité prescrite permettant d'obtenir la valeur la plus petite du facteur Fᵣ de réduction de vibrations parmi un ensemble fini (EFᵣ) de valeurs déterminées du facteur Fᵣ de réduction de vibrations.

7. Procédé suivant la revendication 6, **caractérisé en ce que** *γ* = 1.

8. Procédé suivant l'une quelconque des revendications 1 à 5, **caractérisé en ce que**
les première, deuxième et troisième étapes (E10, E20, E30) sont effectuées d'une manière itérative pour au moins une itération précédente k et au moins une itération suivante k+1 jusqu'à ce que la valeur Hₖ₊₁ du paramètre de réglage H de l'itération suivante k+1atteigne un seuil prescrit Hₘₐₓ, pour :
lors de la deuxième étape (E20) de l'itération suivante k+1, régler par le contrôleur (6) d'équilibrage la valeur Hₖ₊₁ du paramètre de réglage H et la valeur βₖ₊₁ du paramètre de réglage B, avec Hₖ₊₁ égal à une fonction (f) prescrite, croissante en fonction du temps jusqu'au seuil prescrit Hₘₐₓ,
appliquer lors de la troisième étape (E30) de l'itération suivante k+1, par la tête (7) de traitement thermique via le contrôleur (6) d'équilibrage au rotor (3) et en présence de la vibration V mesurée par le capteur (4) de vibrations, la puissance de chauffe ${P}_{k + 1} = r ⋅ {H}_{k + 1} ⋅ {V}_{k + 1} ⋅ {e}^{j ⋅ \left({α}_{k + 1}+{β}_{k + 1}\right)}$
où Vₖ₊₁ est l'amplitude de la vibration V du rotor (3), ayant été mesurée lors de la première étape (E10) de l'itération suivante k+1.

9. Procédé suivant la revendication 8, **caractérisé en ce que** la fonction croissante (f) prescrite est une rampe linéaire croissante en fonction du temps jusqu'au seuil prescrit Hₘₐₓ ou une rampe affine croissante en fonction du temps jusqu'au seuil prescrit Hₘₐₓ.

10. Procédé suivant l'une quelconque des revendications précédentes, **caractérisé en ce que** le procédé comporte en outre les étapes suivantes (E1, E2, E3), effectuées par le contrôleur (6) d'équilibrage avant les première, deuxième et troisième étapes (E10, E20, E30) :
identification (E1) d'un couple d'une valeur cible H_{c} du paramètre de réglage H et d'une valeur cible β_{c} du paramètre de réglage B, qui est situé dans la zone stable (101) de la carte prescrite (100) de stabilité et donnant la valeur la plus petite du facteur Fᵣ de réduction de vibration, strictement inférieure à 1, parmi un ensemble fini (EFᵣ) de valeurs déterminées du facteur Fᵣ de réduction de vibrations,
identification (E2) d'un couple d'une valeur de départ H_{d} du paramètre de réglage H et d'une valeur de départ β_{d} du paramètre de réglage B, qui est situé dans la zone stable (101) de la carte prescrite (100) de stabilité et pour lequel le facteur Fᵣ de réduction de vibrations est strictement inférieure à 1, la valeur de départ H_{d} du paramètre de réglage H étant inférieure à la valeur cible H_{c} du paramètre de réglage H,
identification (E3) dans la carte prescrite (100) de stabilité d'un chemin (103) allant du couple de H_{d} et de β_{d} au couple de H_{c} et de β_{c} par les couples successifs des valeurs de Hₖ et de βₖ, qui sont situés dans la zone stable (101) de la carte prescrite (100) de stabilité,
les première, deuxième et troisième étapes (E10, E20, E30) étant effectuées d'une manière itérative pour les couples successifs des valeurs de Hₖ et de βₖ pour aller du couple de H_{d} et de β_{d} au couple de H_{c} et de β_{c}.

11. Procédé suivant la revendication 10, **caractérisé en ce que** le procédé comporte en outre, avant les première, deuxième et troisième étapes (E10, E20, E30), une étape (E4) de choix d'une durée totale, non nulle, tₘ pour aller du couple de H_{d} et de β_{d} au couple de H_{c} et de β_{c}, effectuée par le contrôleur (6) d'équilibrage.

12. Procédé suivant l'une quelconque des revendications précédentes, **caractérisé en ce que** les première, deuxième et troisième étapes (E10, E20, E30) sont effectuées d'une manière itérative pour au moins une itération précédente k et au moins une itération suivante k+1, pour :
si k=0 ou Vₖ₊₁ > Vₖ, identifier par le contrôleur (6) d'équilibrage lors de la deuxième étape (E20) de l'itération suivante k+1 la valeur Hₖ₊₁ du paramètre de réglage H et la valeur *β*_{*k*+1} du paramètre de réglage B, qui sont situées dans la zone stable (101) de la carte prescrite (100) de stabilité,
et sinon identifier par le contrôleur (6) d'équilibrage lors de la deuxième étape (E20) de l'itération suivante k+1 la valeur Hₖ₊₁ du paramètre de réglage H et la valeur *β*_{*k*+1} du paramètre de réglage B avec Hₖ₊₁= Hₖ et βₖ₊₁= βₖ.

13. Procédé suivant l'une quelconque des revendications précédentes, **caractérisé en ce que** la machine comporte m capteurs cᵢ de vibrations du rotor (3), qui sont montés sur le stator (2), où m est un entier naturel supérieur ou égal à 2 et i est un entier allant de 1 à m,
le procédé comporte en outre les étapes suivantes, avant les première, deuxième et troisième étapes (E10, E20, E30) :
- au cours d'une première étape préparatoire (E01), mesure du vecteur complexe de mesure de vibrations ${Q}_{d} = {\left\{{q}_{{d}_{i}}{e}^{{jγ}_{{d}_{i}}}\right\}}^{T}$ par les m capteurs cᵢ de vibrations (4), où *q_{dᵢ}* est l'amplitude des vibrations du rotor (3) mesurées respectivement par le capteur cᵢ de vibrations (4) et *γ_{dᵢ}* est la phase des vibrations du rotor (3) mesurées respectivement par le capteur cᵢ de vibrations (4),
au cours d'une deuxième étape préparatoire (E02), calcul de la carte (100) prescrite de stabilité en association avec des valeurs du facteur Fᵣ de réduction de vibrations en répétant les sous-étapes suivantes pour chaque valeur de H et de *β* se trouvant dans la zone stable (101) de la carte (10) de stabilité par le contrôleur (6) d'équilibrage :
- calculer (E021) *Q_{f}* solution du système d'équations : $Ξ ⋅ {Q}_{f} = {Q}_{d}$
avec ${Q}_{f} = {\left\{{q}_{{f}_{i}}{e}^{{jγ}_{{f}_{i}}}\right\}}^{T}$
- calculer (E022) les valeurs Fᵣ (H, B) du facteur Fᵣ de réduction de vibrations telles que ${F}_{r} \left(H, β\right) = max \left({\left\{\frac{{q}_{{f}_{i}}}{{q}_{{d}_{i}}}\right\}}_{i ∈ \left[1, m\right]}\right)$
où la matrice Ξ est calculée de la manière suivante :
-- calculer (E0221) une première matrice A telle que *A = -M ·* Ω² *+ j* · Ω · *C + K*
la machine (1) étant représentée par un modèle à éléments finis, comportant des modèle éléments finis, dans lequel la tête (7) de traitement thermique se trouve entre un nœud Ng d'un maillage de la machine (1) et un nœud Nd du maillage de la machine (1) et le capteur (4) de vibration se trouve en face d'un nœud Nc du maillage de la machine (1), où M est une matrice prescrite de masse du modèle à éléments finis de la machine (1),
C étant une matrice prescrite d'amortissement du modèle à éléments finis de la machine (1),
K étant une matrice prescrite de rigidité du modèle à éléments finis de la machine (1),
Ω est la vitesse de rotation,
-- calculer (E0222) une deuxième matrice Π de liaison de degrés de liberté, la matrice Π ayant les valeurs suivantes :
--- valeur 1 à sa ligne tdry1, colonne tx,
--- valeur j à sa ligne tdry1, colonne ty,
--- valeur j à sa ligne tdrx1, colonnne tx,
--- valeur -1 à sa ligne tdrx1, colonne ty,
--- valeur -1 à sa ligne tdry2, colonne tx,
--- valeur -j à sa ligne tdry2, colonne ty,
--- valeur -j à sa ligne tdrx2, colonnne tx,
--- valeur 1 à sa ligne tdrx2, colonne ty,
--- 0 ailleurs,
où j est le nombre complexe racine carrée de -1,
X est une première direction perpendiculaire à l'axe (30) de rotation,
Y est une deuxième direction perpendiculaire à la première direction X et à l'axe (30) de rotation,
tx est l'indice du degré de liberté de déplacement en translation suivant la direction X du nœud Nc,
ty est l'indice du degré de liberté de déplacement en translation suivant la direction Y du nœud Nc,
tdrx1 est l'indice du degré de liberté de déplacement en rotation autour de la direction X du nœud Ng,
tdry1 est l'indice du degré de liberté de déplacement en rotation autour de la direction Y du nœud Ng,
tdrx2 est l'indice du degré de liberté de déplacement en rotation autour de la direction X du nœud Nd,
tdry2 est l'indice du degré de liberté de déplacement en de déplacement en rotation autour de la direction Y du nœud Nd,
-- calculer (E0223) une troisième matrice R de passage, ayant m lignes et n colonnes, où
i est l'indice pour les lignes de la matrice R, ainsi que respectivement pour les capteurs cᵢ de vibrations du rotor (3) et va de 1 à m,
n est le nombre de degrés de liberté du modèle à élément finis,
tᵢ est l'indice pour les colonnes de la matrice R, ainsi que pour les degrés de libertés de déplacement correspondant à respectivement les capteurs cᵢ de vibrations du rotor (3) pour i allant de 1 à m,
la matrice R de passage ayant les valeurs suivantes :
R(i, tᵢ)=1 pour i allant de 1 à m,
0 ailleurs,
-- calculer (E0224) la matrice Ξ , ayant m lignes et n colonnes, où $Ξ = R ⋅ \left(I-H⋅{e}^{jβ}⋅{A}^{- 1}⋅Π\right)$ où *A*⁻¹ est la matrice inverse, ayant été calculée, de la matrice A.

14. Machine tournante (1) comportant
un stator (2),
un rotor (3) apte à tourner autour d'un axe (30) de rotation par rapport au stator (2), au moins un capteur (4) de vibrations du rotor (3), le capteur (4) de vibrations étant monté sur le stator (2),
au moins une tête (7) de traitement thermique, qui occupe une plage angulaire déterminée (θ) de moins de 360° autour de l'axe (30) de rotation en face du rotor (3), qui est sans contact avec le rotor (3) et qui est apte à appliquer au rotor (3) sans contact avec le rotor (3) dans la plage angulaire (θ) déterminée une puissance de chauffe, étant montée sur le stator (2),
au moins un capteur (5) de position angulaire en rotation du rotor (3) autour de l'axe (30) de rotation par rapport au stator (2) étant monté sur le stator (2),
un contrôleur (6) d'équilibrage du rotor (3),
**caractérisée en ce que**
la puissance de chauffe étant un nombre complexe ayant un module positif représentant une amplitude de chauffage appliquée par la au moins une tête (7) de traitement thermique, le nombre complexe ayant un argument représentant une position angulaire à laquelle l'amplitude de chauffage est appliquée par la au moins une tête (7) de traitement thermique dans la plage angulaire déterminée (θ),
le contrôleur (6) d'équilibrage du rotor (3) est apte à régler la puissance de chauffe $P = r ⋅ H ⋅ V {e}^{jβ}$
où H est un paramètre de réglage d'une amplitude de moment de flexion créé par la tête de traitement thermique (7) et est un réel supérieur ou égal à zéro,
β est un paramètre de réglage d'une phase de la puissance de chauffe,
r est un coefficient de sensibilité de flexion du rotor (3) à la puissance de chauffe appliquée par la tête (7) de traitement thermique, le coefficient r de sensibilité étant préenregistré dans le contrôleur (6) d'équilibrage,
au moins une carte (100) prescrite de stabilité du rotor (3) pour au moins une vitesse de rotation déterminée du rotor (3) autour de l'axe (30) de rotation par rapport au stator (2) et pour au moins une position axiale de la tête de traitement thermique (7), étant préenregistrée dans le contrôleur (6) d'équilibrage et indiquant au moins une zone stable (101) et au moins une zone instable (102) pour des couples de valeurs de H et de B, la carte (100) de stabilité étant paramétrée par un facteur Fᵣ de réduction de vibrations déterminé au moins dans la zone stable (101),
le contrôleur (6) d'équilibrage du rotor (3) et le capteur (4) de vibrations étant configurés pour mettre en œuvre au moins les étapes suivantes (E10, E20, E30), effectuées d'une manière itérative pendant la rotation du rotor (3) autour de l'axe (30) de rotation par rapport au stator (2) à la vitesse de rotation déterminée, pour, à chaque itération k :
au cours d'une première étape (E10), mesure, par le capteur (4) de vibrations, d'une amplitude Vₖ d'une vibration V du rotor (3) et d'une phase αₖ de la vibration V du rotor (3) par rapport à une référence de phase selon l'équation *V = Vₖ* · *e^{j·αₖ},*
au cours d'une deuxième étape (E20), identification d'une valeur Hₖ du paramètre de réglage H et d'une valeur βₖ du paramètre de réglage B, qui sont situées dans la zone stable de la carte prescrite (100) de stabilité et pour lesquelles *Fᵣ <* 1, par le contrôleur (6) d'équilibrage,
au cours d'une troisième étape (E30), application de la puissance de chauffe *Pₖ = r* · *Hₖ · Vₖ* · *e*^{*j*·(α*ₖ*+β*ₖ*)} par la tête (7) de traitement thermique via le contrôleur (6) d'équilibrage au rotor (3) et en présence de la vibration V mesurée par le capteur (4) de vibrations.

15. Programme d'ordinateur, comportant des instructions de code pour la mise en œuvre au moins les deuxième et troisième étapes (E20, E30) du procédé d'équilibrage du rotor (3) d'une machine tournante (1) suivant l'une quelconque des revendications 1 à 13, lorsque le programme d'ordinateur est exécuté sur un contrôleur (6).

## Patentansprüche

1. Verfahren zum Auswuchten des Rotors einer drehenden Maschine (1), wobei die drehende Maschine (1) einen Stator (2) aufweist, wobei der Rotor (3) imstande ist, um eine Drehachse (30) relativ zu dem Stator (2) zu drehen,
wobei die drehende Maschine (1) aufweist
mindestens einen Schwingungssensor (4) für den Rotor (3), wobei der Schwingungssensor (4) an dem Stator (2) angebracht ist,
mindestens einen Wärmebehandlungskopf (7), der einen festgelegten Winkelbereich (θ) von weniger als 360° um die Drehachse (30) gegenüber dem Rotor (3) einnimmt, der ohne Kontakt mit dem Rotor (3) ist und der imstande ist, ohne Kontakt mit dem Rotor (3) in dem festgelegten Winkelbereich (θ) eine Heizleistung an den Rotor (3) abzugeben, wobei der Wärmebehandlungskopf (7) an dem Stator (2) angebracht ist,
wobei mindestens ein Sensor zur Erfassung der Drehwinkelposition des Rotors (3) um die Drehachse (30) relativ zu dem Stator (2) an dem Stator (2) angebracht ist,
wobei die Maschine eine Auswuchtsteuerung (6) des Rotors (3) aufweist,
**dadurch gekennzeichnet, dass**
die Heizleistung eine komplexe Zahl mit einem positiven Betrag ist, der eine von dem mindestens einen Wärmebehandlungskopf (7) abgegebene Heizamplitude darstellt, wobei die komplexe Zahl ein Argument aufweist, das eine Winkelposition darstellt, bei der die Heizamplitude von dem mindestens einen Wärmebehandlungskopf (7) innerhalb des festgelegten Winkelbereichs (θ) abgegeben wird,
wobei die Auswuchtsteuerung (6) des Rotors (3) imstande ist, die Heizleistung $P = r ⋅ H ⋅ V {e}^{jβ}$ einzustellen,
wobei H ein Einstellparameter für eine Amplitude eines mittels des Wärmebehandlungskopfs (7) erzeugten Biegemoments des Rotors (3) ist und eine reelle Zahl größer oder gleich Null ist,
β ein Einstellparameter einer Heizleistungsphase ist,
r ein Biegeempfindlichkeitskoeffizient des Rotors (3) gegenüber der von dem Wärmebehandlungskopf (7) abgegebenen Heizleistung ist, wobei der Empfindlichkeitskoeffizient r vorab in der Auswuchtsteuerung (6) gespeichert ist,
wobei mindestens eine vorgegebene Stabilitätskarte (100) des Rotors (3) für mindestens eine festgelegte Drehzahl des Rotors (3) um die Drehachse (30) relativ zu dem Stator (2) und für mindestens eine axiale Position des Wärmebehandlungskopfes (7) in der Auswuchtsteuerung (6) vorab gespeichert ist und mindestens einen stabilen Bereich (101) und mindestens einen instabilen Bereich (102) für Paare von Werten von H und von β angibt, wobei die Stabilitätskarte (100) durch einen festgelegten Schwingungsdämpfungsfaktor Fᵣ mindestens in dem stabilen Bereich (101) parametrisiert ist,
wobei das Verfahren mindestens die folgenden Schritte (E10, E20, E30) umfasst, die iterativ während der Drehung des Rotors (3) um die Drehachse (30) relativ zu dem Stator (2) mit der festgelegten Drehzahl durchgeführt werden, um bei jeder Iteration k:
in einem ersten Schritt (E10) mit dem Schwingungssensor (4) eine Amplitude Vₖ einer Schwingung V des Rotors (3) und eine Phase αₖ der Schwingung V des Rotors (3) relativ zu einer Phasenreferenz gemäß der Gleichung *V = Vₖ · e^{j·αₖ}* zu messen,
in einem zweiten Schritt (E20) einen Wert Hₖ des Einstellparameters H und einen Wert βₖ des Einstellparameters β, die in dem stabilen Bereich der vorgegebenen Stabilitätskarte (100) liegen und für die *Fᵣ <* 1 gilt, durch die Auswuchtsteuerung (6) zu identifizieren,
in einem dritten Schritt (E30) die Heizleistung *Pₖ* = *r ·Hₖ ·Vₖ ·e*^{*j*·(α*ₖ*+β*ₖ*)} mittels des Wärmebehandlungskopfs (7) über die Auswuchtsteuerung (6) und bei Vorliegen der von dem Schwingungssensor (4) gemessenen Schwingung V auf den Rotor (3) anzuwenden.

2. Verfahren nach Anspruch 1, **dadurch gekennzeichnet, dass** der Biegeempfindlichkeitskoeffizient r des Rotors (3) gegenüber der von dem Wärmebehandlungskopf (7) abgegebenen Heizleistung in der Auswuchtsteuerung (6) als gleich dem Verhältnis ( $r = \frac{{P}_{1}}{{M}_{1}}$) eines festgelegten, von Null verschiedenen Istwerts P₁ der Heizleistung zu einem gemessenen oder berechneten Wert (M₁) des Biegemoments des Rotors (3), der durch die Anwendung des Istwerts (P₁) der Heizleistung mittels des Wärmebehandlungskopfs (7) über die Auswuchtsteuerung (6) auf den Rotor (3) hervorgerufen wird, vorgegeben ist.

3. Verfahren nach einem beliebigen der vorstehenden Ansprüche, **dadurch gekennzeichnet, dass** *r* · *H ·Vₖ* ≤ *Pₘₐₓ* ist,
wobei Pₘₐₓ ein maximaler, positiver und von Null verschiedener Istwert der Heizleistung ist.

4. Verfahren nach einem beliebigen der Ansprüche 1 bis 3, **dadurch gekennzeichnet, dass** der Rotor (3) von mindestens zwei Lagern (20a, 20b), die entlang der Drehachse (30) voneinander beabstandet sind, relativ zu dem Stator (2) um seine Drehachse (30) drehbar geführt wird, wobei der Wärmebehandlungskopf (7) und der Schwingungssensor (4) zwischen den Lagern (20a, 20b) angeordnet sind,
βₖ = 0° für die Maschine (1), deren Rotor (3) eine auskragende Masse (M₁, M₂) an einem der Lager (20a, 20b) besitzt, die kleiner als eine zwischen den Lagern (20a, 20b) befindliche Zwischenmasse (M₀) des Rotors (3) ist, und für die Maschine (1), die bei einer Drehfrequenz des Rotors (3) betrieben wird, die größer als eine Frequenz eines ersten Biegeschwingungsmodus des Rotors (3) ist.

5. Verfahren nach einem beliebigen der Ansprüche 1 bis 3, **dadurch gekennzeichnet, dass** der Rotor (3) von mindestens zwei Lagern (20a, 20b), die entlang der Drehachse (30) voneinander beabstandet sind, relativ zu dem Stator (2) um seine Drehachse (30) drehbar geführt wird, wobei der Wärmebehandlungskopf (7) und der Schwingungssensor (4) zwischen den Lagern (20a, 20b) angeordnet sind,
βₖ = 180° für die Maschine (1), deren Rotor (3) eine auskragende Masse (M₁, M₂) an einem der Lager (20a, 20b) besitzt, die kleiner als eine zwischen den Lagern (20a, 20b) befindliche Zwischenmasse (M₀) des Rotors (3) ist, und für die Maschine (1), die bei einer Drehfrequenz des Rotors (3) betrieben wird, die kleiner als eine Frequenz eines ersten Biegeschwingungsmodus des Rotors (3) ist.

6. Verfahren nach einem beliebigen der Ansprüche 1 bis 5, **dadurch gekennzeichnet, dass** der erste, zweite und dritte Schritt (E10, E20, E30) iterativ für mindestens eine vorhergehende Iteration k und mindestens eine nachfolgende Iteration k+1 durchgeführt werden, um in dem zweiten Schritt (E20) der nachfolgenden Iteration k+1:
über die Auswuchtsteuerung (6) den Wert Hₖ₊₁ des Einstellparameters H so einzustellen, dass ${H}_{k + 1} = \frac{{γP}_{max}}{r ⋅ {V}_{k + 1}}$ ist,
wobei
Vₖ₊₁ die Amplitude der Schwingung V des Rotors (3) ist, die in dem ersten Schritt (E10) der nachfolgenden Iteration k+1 gemessen wurde,
*γ* ein Iterations-Einstellfaktor ist, der eine strikt positive reelle Zahl kleiner oder gleich 1 ist und in der Auswuchtsteuerung (6) vorab gespeichert ist,
und über die Auswuchtsteuerung (6) den Wert *β*_{*k*+1} des Einstellparameters β anhand der vorgegebenen Stabilitätskarte (100) zu identifizieren, wodurch der kleinste Wert des Schwingungsdämpfungsfaktors Fᵣ aus einer endlichen Menge (EFᵣ) festgelegter Werte des Schwingungsdämpfungsfaktors Fᵣ erhalten wird.

7. Verfahren nach Anspruch 6, **dadurch gekennzeichnet, dass** *γ* = 1.

8. Verfahren nach einem beliebigen der Ansprüche 1 bis 5, **dadurch gekennzeichnet, dass**
der erste, zweite und dritte Schritt (E10, E20, E30) iterativ für mindestens eine vorhergehende Iteration k und mindestens eine nachfolgende Iteration k+1 durchgeführt werden, bis der Wert Hₖ₊₁ des Einstellparameters H der nachfolgenden Iteration k+1 einen vorgegebenen Schwellenwert Hₘₐₓ erreicht, um:
in dem zweiten Schritt (E20) der nachfolgenden Iteration k+1 über die Auswuchtsteuerung (6) den Wert Hₖ₊₁ des Einstellparameters H und den Wert βₖ₊₁ des Einstellparameters β, mit Hₖ₊₁ gleich einer vorgegebenen Funktion (f), die in Abhängigkeit von der Zeit bis zu dem vorgegebenen Schwellenwert Hₘₐₓ ansteigend ist, einzustellen,
in dem dritten Schritt (E30) der nachfolgenden Iteration k+1 mit dem Wärmebehandlungskopf (7) über die Auswuchtsteuerung (6) und bei Vorliegen der von dem Schwingungssensor (4) gemessenen Schwingung V auf den Rotor (3) die Heizleistung anzuwenden ${P}_{k + 1} = r ⋅ {H}_{k + 1} ⋅ {V}_{k + 1} ⋅ {e}^{j ⋅ \left({α}_{k + 1}+{β}_{k + 1}\right)}$
wobei Vₖ₊₁ die Amplitude der Schwingung V des Rotors (3) ist, die in dem ersten Schritt (E10) der nachfolgenden Iteration k+1 gemessen wurde.

9. Verfahren nach Anspruch 8, **dadurch gekennzeichnet, dass** die vorgegebene steigende Funktion (f) eine lineare, in Abhängigkeit von der Zeit bis zu dem vorgegebenen Schwellenwert Hₘₐₓ ansteigende Rampe oder eine affine, in Abhängigkeit von der Zeit bis zu dem vorgegebenen Schwellenwert Hₘₐₓ ansteigende Rampe ist.

10. Verfahren nach einem beliebigen der vorstehenden Ansprüche, **dadurch gekennzeichnet, dass** das Verfahren ferner die folgenden Schritte (E1, E2, E3) aufweist, die von der Auswuchtsteuerung (6) vor dem ersten, zweiten und dritten Schritt (E10, E20, E30) durchgeführt werden:
Identifizieren (E1) eines Paares aus einem Zielwert H_{c} des Einstellparameters H und einem Zielwert β_{c} des Einstellparameters β, das in dem stabilen Bereich (101) der vorgegebenen Stabilitätskarte (100) liegt und den kleinsten Wert des Schwingungsdämpfungsfaktors Fᵣ, der strikt kleiner als 1 ist, aus einer endlichen Menge (EFᵣ) festgelegter Werte des Schwingungsdämpfungsfaktors Fᵣ liefert,
Identifizieren (E2) eines Paares aus einem Startwert H_{d} des Einstellparameters H und einem Startwert β_{d} des Einstellparameters β, das sich in dem stabilen Bereich (101) der vorgegebenen Stabilitätskarte (100) befindet und für das der Schwingungsdämpfungsfaktor Fᵣ strikt kleiner als 1 ist, wobei der Startwert H_{d} des Einstellparameters H kleiner als der Zielwert H_{c} des Einstellparameters H ist,
Identifizieren (E3) eines Pfades (103) in der vorgegebenen Stabilitätskarte (100), der von dem Paar aus H_{d} und β_{d} zu dem Paar aus H_{c} und β_{c} durch aufeinanderfolgende Paare der Werte von Hₖ und βₖ, die sich in dem stabilen Bereich (101) der vorgegebenen Stabilitätskarte (100) befinden, gelangt,
wobei der erste, zweite und dritte Schritt (E10, E20, E30) iterativ für die aufeinanderfolgenden Paare der Werte von Hₖ und βₖ durchgeführt werden, um von dem Paar aus H_{d} und β_{d} zu dem Paar aus H_{c} und β_{c} zu gelangen.

11. Verfahren nach Anspruch 10, **dadurch gekennzeichnet, dass** das Verfahren ferner vor dem ersten, zweiten und dritten Schritt (E10, E20, E30) einen Auswahlschritt (E4) einer von Null verschiedenen Gesamtdauer tₘ aufweist_{,} um von dem Paar aus H_{d} und β_{d} zu dem Paar aus H_{c} und β_{c} zu gelangen, der von der Auswuchtsteuerung (6) durchgeführt wird.

12. Verfahren nach einem beliebigen der vorstehenden Ansprüche, **dadurch gekennzeichnet, dass** der erste, zweite und dritte Schritt (E10, E20, E30) iterativ für mindestens eine vorhergehende Iteration k und mindestens eine nachfolgende Iteration k+1 durchgeführt werden, um:
wenn k = 0 oder Vₖ₊₁ > Vₖ gilt, in dem zweiten Schritt (E20) der nachfolgenden Iteration k+1 über die Auswuchtsteuerung (6) den Wert Hₖ₊₁ des Einstellparameters H und den Wert *β*_{*k*+1} des Einstellparameters β zu identifizieren, die sich in dem stabilen Bereich (101) der vorgegebenen Stabilitätskarte (100) befinden,
und andernfalls in dem zweiten Schritt (E20) der nachfolgenden Iteration k+1 über die Auswuchtsteuerung (6) den Wert Hₖ₊₁ des Einstellparameters H und den Wert *β*_{*k*+1} des Einstellparameters β mit Hₖ₊₁ = Hₖ und βₖ₊₁ = βₖ zu identifizieren.

13. Verfahren nach einem beliebigen der vorstehenden Ansprüche, **dadurch gekennzeichnet, dass** die Maschine m Schwingungssensoren cᵢ des Rotors (3) umfasst, die an dem Stator (2) angebracht sind, wobei m eine natürliche Zahl größer oder gleich 2 ist und i eine ganze Zahl von 1 bis m ist,
wobei das Verfahren ferner vor dem ersten, zweiten und dritten Schritt (E10, E20, E30) die folgenden Schritte aufweist:
in einem ersten Vorbereitungsschritt (E01) Messung des komplexen Schwingungsmessvektors ${Q}_{d} = {\left\{{q}_{{d}_{i}}{e}^{{jγ}_{{d}_{i}}}\right\}}^{T}$ durch die m Schwingungssensoren cᵢ (4), wobei *q_{dᵢ}* die Amplitude der Schwingungen des Rotors (3) ist, die jeweils von dem Schwingungssensor cᵢ (4) gemessen wird und *γ_{dᵢ}* die Phase der von dem jeweiligen Schwingungssensor cᵢ (4) gemessenen Schwingungen des Rotors (3) ist,
in einem zweiten Vorbereitungsschritt (E02) Berechnung der vorgegebenen Stabilitätskarte (100) in Verbindung mit Werten des Schwingungsdämpfungsfaktors Fᵣ durch Wiederholung der folgenden Teilschritte für jeden Wert von H und von *β*, der sich in dem stabilen Bereich (101) der Stabilitätskarte (10) befindet, über die Auswuchtsteuerung (6):
- Berechnung (E021) von *Q_{f}* als Lösung des Gleichungssystems: $Ξ ⋅ {Q}_{f} = {Q}_{d}$
Mit ${Q}_{f} = {\left\{{q}_{{f}_{i}}{e}^{{jγ}_{{f}_{i}}}\right\}}^{T}$
- Berechnung (E022) der Werte Fᵣ (H, β) des Schwingungsdämpfungsfaktors Fᵣ derart, dass ${F}_{r} \left(H, β\right) = max \left({\left\{\frac{{q}_{{f}_{i}}}{{q}_{{d}_{i}}}\right\}}_{i ∈ \left[1, m\right]}\right)$
wobei die Matrix Ξ wie folgt berechnet wird:
-- Berechnen (E0221) einer ersten Matrix A, so dass *A* = *-M · Ω*² + *j ·* Ω *· C* + *K*
wobei die Maschine (1) durch ein Finite-Elemente-Modell dargestellt wird, das Finite-Elemente umfasst, wobei sich der Wärmebehandlungskopf (7) zwischen einem Knoten Ng eines Netzes der Maschine (1) und einem Knoten Nd des Netzes der Maschine (1) befindet und sich der Schwingungssensor (4) gegenüber einem Knoten Nc des Netzes der Maschine (1) befindet, wobei M eine vorgegebene Massenmatrix des Finite-Elemente-Modells der Maschine (1) ist,
wobei C eine vorgegebene Dämpfungsmatrix des Finite-Elemente-Modells der Maschine (1) ist,
wobei K eine vorgegebene Steifigkeitsmatrix des Finite-Elemente-Modells der Maschine (1) ist,
Ω die Drehzahl ist,
-- Berechnen (E0222) einer zweiten Freiheitsgrad-Verbindungsmatrix Π, wobei die Matrix Π folgende Werte aufweist:
--- Wert 1 in Zeile tdry1, Spalte tx,
--- Wert j in Zeile tdry1, Spalte ty,
--- Wert j in Zeile tdrx1, Spalte tx,
--- Wert -1 in Zeile tdrx1, Spalte ty,
--- Wert -1 in Zeile tdry2, Spalte tx,
--- Wert -j in Zeile tdry2, Spalte ty,
--- Wert -j in Zeile tdrx2, Spalte tx,
--- Wert 1 in Zeile tdrx2, Spalte ty,
--- 0 an anderen Stellen,
wobei j die komplexe Quadratwurzel von -1 ist,
X eine erste Richtung senkrecht zu der Drehachse (30) ist,
Y eine zweite Richtung senkrecht zu der ersten Richtung X und zu der Drehachse (30) ist,
tx der Index des Freiheitsgrades für die Translationsbewegung des Knotens Nc gemäß der X-Richtung ist,
ty der Index des Freiheitsgrades für die Translationsbewegung des Knotens Nc gemäß der Y-Richtung ist,
tdrx1 der Index des Freiheitsgrades für die Drehbewegung des Knotens Ng um die X-Richtung ist,
tdry1 der Index des Freiheitsgrades für die Drehbewegung des Knotens Ng um die Y-Richtung ist,
tdrx2 der Index des Freiheitsgrades der Rotationsbewegung des Knotens Nd um die X-Richtung ist,
tdry2 der Index des Freiheitsgrades der Drehbewegung des Knotens Nd um die Y-Richtung ist,
-- Berechnen (E0223) einer dritten Übergangsmatrix R mit m Zeilen und n Spalten, wobei
i der Index für die Zeilen der Matrix R sowie jeweils für die Schwingungssensoren cᵢ des Rotors (3) ist und von 1 bis m reicht,
n die Anzahl der Freiheitsgrade des Finite-Elemente-Modells ist,
tᵢ der Index für die Spalten der Matrix R sowie für die Bewegungsfreiheitsgrade ist, die jeweils den Schwingungssensoren cᵢ des Rotors (3) entsprechen, wobei i von 1 bis m reicht,
wobei die Übergangsmatrix R die folgende Werte aufweist:
R(i, tᵢ) = 1 für i von 1 bis m,
0 an anderen Stellen,
-- Berechnen (E0224) der Matrix Ξ mit m Zeilen und n Spalten, wobei $Ξ = R ⋅ \left(I-H⋅{e}^{jβ}⋅{A}^{- 1}⋅Π\right)$
wobei *A*⁻¹ die berechnete Inversmatrix der Matrix A ist.

14. Drehende Maschine (1), aufweisend
einen Stator (2),
einen Rotor (3), der imstande ist, um eine Drehachse (30) relativ zu dem Stator (2) zu drehen, mindestens einen Schwingungssensor (4) für den Rotor (3), wobei der Schwingungssensor (4) an dem Stator (2) angebracht ist,
mindestens einen Wärmebehandlungskopf (7), der einen festgelegten Winkelbereich (θ) von weniger als 360° um die Drehachse (30) gegenüber dem Rotor (3) einnimmt, der ohne Kontakt mit dem Rotor (3) ist und der imstande ist, ohne Kontakt mit dem Rotor (3) in dem festgelegten Winkelbereich (θ) eine Heizleistung an den Rotor (3) abzugeben, wobei der Wärmebehandlungskopf (7) an dem Stator (2) angebracht ist,
wobei mindestens ein Sensor (5) zur Erfassung der Drehwinkelposition des Rotors (3) um die Drehachse (30) relativ zu dem Stator (2) an dem Stator (2) angebracht ist,
eine Auswuchtsteuerung (6) des Rotors (3),
**dadurch gekennzeichnet, dass**
die Heizleistung eine komplexe Zahl mit einem positiven Betrag ist, der eine von dem mindestens einen Wärmebehandlungskopf (7) abgegebene Heizamplitude darstellt, wobei die komplexe Zahl ein Argument aufweist, das eine Winkelposition darstellt, bei der die Heizamplitude von dem mindestens einen Wärmebehandlungskopf (7) innerhalb des festgelegten Winkelbereichs (θ) abgegeben wird,
wobei die Auswuchtsteuerung (6) des Rotors (3) imstande ist, die Heizleistung $P = r ⋅ H ⋅ V {e}^{jβ}$ einzustellen,
wobei H ein Einstellparameter für eine Amplitude eines mittels des Wärmebehandlungskopfs (7) erzeugten Biegemoments des Rotors (3) ist und eine reelle Zahl größer oder gleich Null ist,
β ein Einstellparameter einer Heizleistungsphase ist,
r ein Biegeempfindlichkeitskoeffizient des Rotors (3) gegenüber der von dem Wärmebehandlungskopf (7) abgegebenen Heizleistung ist, wobei der Empfindlichkeitskoeffizient r in der Auswuchtsteuerung (6) vorab gespeichert ist,
wobei mindestens eine vorgegebene Stabilitätskarte (100) des Rotors (3) für mindestens eine festgelegte Drehzahl des Rotors (3) um die Drehachse (30) relativ zu dem Stator (2) und für mindestens eine axiale Position des Wärmebehandlungskopfes (7) in der Auswuchtsteuerung (6) vorab gespeichert ist und mindestens einen stabilen Bereich (101) und mindestens einen instabilen Bereich (102) für Paare von Werten von H und von β angibt, wobei die Stabilitätskarte (100) durch einen festgelegten Schwingungsdämpfungsfaktor Fᵣ mindestens in dem stabilen Bereich (101), parametrisiert ist,
wobei die Auswuchtsteuerung (6) des Rotors (3) und der Schwingungssensor (4) dazu konfiguriert sind, mindestens die folgenden Schritte (E10, E20, E30) durchzuführen, die iterativ während der Drehung des Rotors (3) um die Drehachse (30) relativ zu dem Stator (2) mit der festgelegten Drehzahl durchgeführt werden, um bei jeder Iteration k:
in einem ersten Schritt (E10) mit dem Schwingungssensor (4) eine Amplitude Vₖ einer Schwingung V des Rotors (3) und eine Phase αₖ der Schwingung V des Rotors (3) relativ zu einer Phasenreferenz gemäß der Gleichung *V* = *Vₖ · e^{j·αₖ}* zu messen,
in einem zweiten Schritt (E20) einen Wert Hₖ des Einstellparameters H und einen Wert βₖ des Einstellparameters β, die in dem stabilen Bereich der vorgegebenen Stabilitätskarte (100) liegen und für die *Fᵣ* < 1 gilt, durch den Auswuchtsteuerung (6) zu identifizieren,
in einem dritten Schritt (E30) die Heizleistung *Pₖ* = *r · Hₖ · Vₖ · e*^{*j*·(α*ₖ*+β*ₖ*)} mittels des Wärmebehandlungskopfs (7) über die Auswuchtsteuerung (6) und bei Vorliegen der von dem Schwingungssensor (4) gemessenen Schwingung V auf den Rotor (3) anzuwenden.

15. Computerprogramm, das Codeanweisungen zur Durchführung mindestens des zweiten und dritten Schritts (E20, E30) des Verfahrens zum Auswuchten des Rotors (3) einer drehenden Maschine (1) nach einem beliebigen der Ansprüche 1 bis 13 aufweist, wobei das Computerprogramm auf einer Steuerung (6) ausgeführt wird.

## Claims

1. A method for balancing the rotor of a rotating machine (1), the rotating machine (1) including a stator (2), the rotor (3) being able to rotate about an axis of rotation (30) relative to the stator (2),
the rotating machine (1) including:
at least one rotor (3) vibration sensor (4), the rotor vibration sensor (4) being mounted on the stator (2),
at least one heat treatment head (7), which occupies a determined angular range (θ) of less than 360° about the axis of rotation (30) facing the rotor (3), which is without contact with the rotor (3) and which is able to apply a heating power to the rotor (3) without contact with the rotor (3) in the determined angular range (θ), being mounted on the stator (2),
at least one sensor of the angular position in rotation of the rotor (3) about the axis of rotation (30) relative to the stator (2) being mounted on the stator (2),
the rotating machine including a balancing controller (6) for balancing the rotor (3),
**characterized in that**
the heating power is a complex number having a positive modulus representing a heating amplitude applied by the at least one heat treatment head (7), the complex number having an argument representing an angular position at which the heating amplitude is applied by the at least one heat treatment head (7) in the determined angular range (θ),
the balancing controller (6) for balancing the rotor (3) is able to adjust the heating power $P = r ⋅ H ⋅ {Ve}^{jβ}$
where H is an adjustment parameter for an amplitude of a bending moment of the rotor (3), created by the heat treatment head (7), and is a real greater than or equal to zero,
β is an adjustment parameter for a phase of the heating power,
r is a coefficient of bending sensitivity of the rotor (3) to the heating power applied by the heat treatment head (7), the coefficient r of bending sensitivity being pre-recorded in the balancing controller (6),
at least one prescribed rotor (3) stability map (100) for at least one determined rotation speed of the rotor (3) about the axis of rotation (30) relative to the stator (2) and for at least one axial position of the heat treatment head (7), being pre-recorded in the balancing controller (6) and indicating at least one stable area (101) and at least one unstable area (102) for pairs of values of H and β, the stability map (100) being parameterized by a vibration reduction factor Fᵣ determined at least in the stable area (101),
the method including at least the following steps (E10, E20, E30), carried out iteratively during the rotation of the rotor (3) about the axis of rotation (30) relative to the stator (2) at the determined rotation speed, in order to, at each iteration k:
during a first step (E10), measure, by the rotor vibration sensor (4), an amplitude Vₖ of a vibration V of the rotor (3) and a phase αₖ of the vibration V of the rotor (3) relative to a phase reference according to the equation *V* = *Vₖ* · *e*^{*j*·α*ₖ*},
during a second step (E20), identify a value Hₖ of the adjustment parameter H and a value βₖ of the adjustment parameter β, which are located in the stable area of the prescribed stability map (100) and for which *Fᵣ* < 1, by the balancing controller (6),
during a third step (E30), apply the heating power *Pₖ* = *r* · *Hₖ* · *Vₖ* · *e*^{*j*·(α*ₖ*+β*ₖ*)} by the heat treatment head (7) via the balancing controller (6) to the rotor (3) and in the presence of the vibration V measured by the rotor vibration sensor (4).

2. The method according to claim 1, **characterized in that** the coefficient r of bending sensitivity of the rotor (3) to the heating power applied by the heat treatment head (7) is prescribed in the balancing controller (6) as being equal to the ratio ( $r = \frac{{P}_{1}}{{M}_{1}}$) of a determined and non-zero real value P₁ of the heating power to a measured or calculated value (M₁) of the bending moment of the rotor (3), caused by the application of the real value (P₁) of the heating power by the heat treatment head (7) via the balancing controller (6) to the rotor (3).

3. The method according to any one of the preceding claims, **characterized in that** $r ⋅ H ⋅ {V}_{k} \leq {P}_{max}$ where Pₘₐₓ is a positive non-zero maximum real value of the heating power.

4. The method according to any one of claims 1 to 3, **characterized in that** the rotor (3) is guided in rotation about its axis of rotation (30) relative to the stator (2) by at least two bearings (20a, 20b) distant from each other along the axis of rotation (30), the heat treatment head (7) and the rotor vibration sensor (4) being placed between the bearings (20a, 20b),
βₖ = 0° for the rotating machine (1) whose rotor (3) has a mass (M₁, M₂) overhanging from one of the bearings (20a, 20b), which is smaller than an intermediate mass (M₀) of the rotor (3) located between the bearings (20a, 20b) and for the rotating machine (1) operating at a rotation frequency of the rotor (3), which is greater than a frequency of a first bending mode of the rotor (3).

5. The method according to any one of claims 1 to 3, **characterized in that** the rotor (3) is guided in rotation about its axis of rotation (30) relative to the stator (2) by at least two bearings (20a, 20b) distant from each other along the axis of rotation (30), the heat treatment head (7) and the rotor vibration sensor (4) being placed between the bearings (20a, 20b),
βₖ = 180° for the rotating machine (1) whose rotor (3) has a mass (M₁, M₂) overhanging from one of the bearings (20a, 20b), which is smaller than an intermediate mass (M₀) of the rotor (3) located between the bearings (20a, 20b) and for the rotating machine (1) operating at a rotation frequency of the rotor (3), which is smaller than a frequency of a first bending mode of the rotor (3).

6. The method according to any one of claims 1 to 5, **characterized in that** the first step (E10), the second step (E20) and the third step (E30) are carried out iteratively for at least one previous iteration k and at least one following iteration k+1, in order to, during the second step (E20) of the following iteration k+1:
adjust by the balancing controller (6) the value Hₖ₊₁ of the adjustment parameter H such that ${H}_{k + 1} = \frac{{γP}_{max}}{r ⋅ {V}_{k + 1}}$,
where
Vₖ₊₁ is the amplitude of the vibration V of the rotor (3), having been measured during the first step (E10) of the following iteration k+1,
*γ* is an iteration adjustment factor, which is a strictly positive real and less than or equal to 1 and which is pre-recorded in the balancing controller (6),
and identify by the balancing controller (6) the value *β*_{*k*+1} of the adjustment parameter β from the prescribed stability map (100) making it possible to obtain the smallest value of the vibration reduction factor Fᵣ among a finite set (EFᵣ) of determined values of the vibration reduction factor Fᵣ.

7. The method according to claim 6, **characterized in that** *γ* = 1.

8. The method according to any one of claims 1 to 5, **characterized in that** the first step (E10), the second step (E20) and the third step (E30) are carried out iteratively for at least one previous iteration k and at least one following iteration k+1 until the value Hₖ₊₁ of the adjustment parameter H of the following iteration k+1 reaches a prescribed threshold Hₘₐₓ, in order to:
during the second step (E20) of the following iteration k+1, adjust by the balancing controller (6) the value Hₖ₊₁ of the adjustment parameter H and the value βₖ₊₁ of the adjustment parameter β, with Hₖ₊₁ equal to a prescribed function (f), increasing as a function of time up to the prescribed threshold Hₘₐₓ,
apply during the third step (E30) of the following iteration k+1, by the heat treatment head (7) via the balancing controller (6) to the rotor (3) and in the presence of the vibration V measured by the rotor vibration sensor (4), the heating power ${P}_{k + 1} = r ⋅ {H}_{k + 1} ⋅ {V}_{k + 1} ⋅ {e}^{j ⋅ \left({α}_{k + 1}+{β}_{k + 1}\right)}$
where Vₖ₊₁ is the amplitude of the vibration V of the rotor (3), having been measured during the first step (E10) of the following iteration k+1.

9. The method according to claim 8, **characterized in that** the prescribed increasing function (f) is a linear ramp increasing as a function of time up to the prescribed threshold Hₘₐₓ or an affine ramp increasing as a function of time up to the prescribed threshold Hₘₐₓ.

10. The method according to any one of the preceding claims, **characterized in that** the method further includes the following steps (E1, E2, E3), carried out by the balancing controller (6) before the first step (E10), the second step (E20) and the third step (E30):
identifying (E1) a pair of a target value H_{c} of the adjustment parameter H and of a target value β_{c} of the adjustment parameter β, which is located in the stable area (101) of the prescribed stability map (100) and which gives the smallest value of the vibration reduction factor Fᵣ, strictly less than 1, among a finite set (EFᵣ) of determined values of the vibration reduction factor Fᵣ,
identifying (E2) a pair of a starting value H_{d} of the adjustment parameter H and of a starting value β_{d} of the adjustment parameter β, which is located in the stable area (101) of the prescribed stability map (100) and for which the vibration reduction factor Fᵣ is strictly less than 1, the starting value H_{d} of the adjustment parameter H being smaller than the target value H_{c} of the adjustment parameter H,
identifying (E3) in the prescribed stability map (100) a path (103) going from the pair of H_{d} and β_{d} to the pair of H_{c} and β_{c} by successive pairs of the values of Hₖ and βₖ, which are located in the stable area (101) of the prescribed stability map (100),
the first step (E10), the second step (E20) and the third step (E30) being carried out iteratively for the successive pairs of the values of Hₖ and βₖ to go from the pair of H_{d} and β_{d} to the pair of H_{c} and β_{c}.

11. The method according to claim 10, **characterized in that** the method further includes, before the first step (E10), the second step (E20) and the third step (E30), a step (E4) of choosing a total, non-zero duration, tₘ to go from the pair of H_{d} and β_{d} to the pair of H_{c} and β_{c}, carried out by the balancing controller (6).

12. The method according to any one of the preceding claims, **characterized in that** the first step (E10), the second step (E20) and the third step (E30) are carried out iteratively for at least one previous iteration k and at least one following iteration k+1, in order to:
if k=0 or Vₖ₊₁>Vₖ, identify by the balancing controller (6) during the second step (E20) of the following iteration k+1 the value Hₖ₊₁ of the adjustment parameter H and the value *β*_{*k*+1} of the adjustment parameter β, which are located in the stable area (101) of the prescribed stability map (100),
and otherwise identify by the balancing controller (6) during the second step (E20) of the following iteration k+1 the value Hₖ₊₁ of the adjustment parameter H and the value *β*_{*k*+1} of the adjustment parameter β with Hₖ₊₁= Hₖ and βₖ₊₁= βₖ.

13. The method according to any one of the preceding claims, **characterized in that** the rotating machine includes m rotor (3) vibration sensors cᵢ which are mounted on the stator (2), where m is a natural number greater than or equal to 2 and i is an integer ranging from 1 to m,
the method further includes the following steps, before the first, second and third steps (E10, E20, E30):
during a first preparatory step (E01), measuring a complex vibration measurement vector ${Q}_{d} = {\left\{{q}_{{d}_{i}}{e}^{{jγ}_{{d}_{i}}}\right\}}^{T}$ by the m rotor vibration sensors cᵢ (4), where *q_{dᵢ}* is the amplitude of the vibrations of the rotor (3) measured respectively by the rotor vibration sensor cᵢ (4) and *γ_{dᵢ}* is the phase of the vibrations of the rotor (3) measured respectively by the rotor vibration sensor cᵢ (4),
during a second preparatory step (E02), calculating the prescribed stability map (100) in association with values of the vibration reduction factor Fᵣ by repeating the following sub-steps for each value of H and *β* located in the stable area (101) of the stability map (10) by the balancing controller (6):
- calculating (E021) *Q_{f}* being solution of the system of equations: $Ξ ⋅ {Q}_{f} = {Q}_{d}$
with ${Q}_{f} = {\left\{{q}_{{f}_{i}}{e}^{{jγ}_{{f}_{i}}}\right\}}^{T}$
- calculating (E022) the values Fᵣ (H, B) of the vibration reduction factor Fᵣ such that: ${F}_{r} \left(H, β\right) = max \left({\left\{\frac{{q}_{{f}_{i}}}{{q}_{{d}_{i}}}\right\}}_{i ∈ \left[1, m\right]}\right)$
where the matrix Ξ is calculated as follows:
-- calculating (E0221) a first matrix A such that *A = -M ·* Ω² *+ j* · Ω *· C + K*
the rotating machine (1) being represented by a finite element model, including finite elements, in which the heat treatment head (7) is located between a node Ng of a machine (1) mesh and a node Nd of the machine (1) mesh and the rotor vibration sensor (4) is located facing a node Nc of the machine (1) mesh,
where M is a prescribed mass matrix of the finite element model of the rotating machine (1),
*C* being a prescribed damping matrix of the finite element model of the rotating machine (1),
K being a prescribed stiffness matrix of the finite element model of the rotating machine (1),
Ω being the determined rotation speed,
-- calculating (E0222) a second matrix Π of binding of degrees of freedom, the second matrix Π having the following values:
--- value 1 in its row tdry1, column tx,
--- value j in its row tdry1, column ty,
--- value j in its row tdrx1, column tx,
--- value -1 in its row tdrx1, column ty,
--- value -1 in its row tdry2, column tx,
--- value -j in its row tdry2, column ty,
--- value -j in its row tdrx2, column tx,
--- value 1 in its row tdrx2, column ty,
--- 0 elsewhere,
where j is the complex number being square root of -1,
X is a first direction perpendicular to the axis of rotation (30),
Y is a second direction perpendicular to the first direction X and to the axis of rotation (30),
tx is an index of a translational displacement degree of freedom along the first direction X of the node Nc,
ty is an index of a translational displacement degree of freedom along the second direction Y of the node Nc,
tdrx1 is an index of a rotational displacement degree of freedom around the first direction X of the node Ng,
tdry1 is an index of a rotational displacement degree of freedom around the second direction Y of the node Ng,
tdrx2 is an index of a rotational displacement degree of freedom around the first direction X of the node Nd,
tdry2 is an index of a rotational displacement degree of freedom around the second direction Y of the node Nd,
-- calculating (E0223) a third transition matrix R, having m rows and n columns, where:
i is an index for the rows of the third transition matrix R, as well as respectively for the rotor (3) vibration sensors cᵢ and ranges from 1 to m,
n is a number of degrees of freedom of the finite element model,
tᵢ is an index for the columns of the third transition matrix R, as well as for the displacement degrees of freedom corresponding respectively to the rotor vibration sensors cᵢ (3), for ranging from 1 to m,
the third transition matrix R having the following values:
R(i, tᵢ)=1 for i ranging from 1 to m,
0 elsewhere,
-- calculating (E0224) the matrix Ξ, having m rows and n columns, where: $Ξ = R ⋅ \left(I-H⋅{e}^{jβ}⋅{A}^{- 1}⋅Π\right)$ where *A*⁻¹ is the inverse matrix, having been calculated, of the first matrix A.

14. A rotating machine (1) including:
a stator (2),
a rotor (3) able to rotate about an axis of rotation (30) relative to the stator (2), at least one rotor (3) vibration sensor (4), the rotor vibration sensor (4) being mounted on the stator (2),
at least one heat treatment head (7), which occupies a determined angular range (θ) of less than 360° about the axis of rotation (30) facing the rotor (3), which is without contact with the rotor (3) and which is able to apply a heating power to the rotor (3) without contact with the rotor (3) in the determined angular range (θ), being mounted on the stator (2),
at least one sensor (5) of the angular position in rotation of the rotor (3) about the axis of rotation (30) relative to the stator (2) being mounted on the stator (2),
a balancing controller (6) for balancing the rotor (3),
**characterized in that**
the heating power being a complex number having a positive modulus representing a heating amplitude applied by the at least one heat treatment head (7), the complex number having an argument representing an angular position at which the heating amplitude is applied by the at least one heat treatment head (7) in the determined angular range (θ),
the balancing controller (6) for balancing the rotor (3) is able to adjust the heating power *P* = *r* · *H* · *Ve^{jβ}*
where H is an adjustment parameter for an amplitude of a bending moment created by the heat treatment head (7) and is a real greater than or equal to zero,
β is an adjustment parameter for a phase of the heating power,
r is a coefficient of bending sensitivity of the rotor (3) to the heating power applied by the heat treatment head (7), the r of bending sensitivity being pre-recorded in the balancing controller (6),
at least one prescribed rotor (3) stability map (100) for at least one determined rotation speed of the rotor (3) about the axis of rotation (30) relative to the stator (2) and for at least one axial position of the heat treatment head (7), being pre-recorded in the balancing controller (6) and indicating at least one stable area (101) and at least one unstable area (102) for pairs of values of H and β, the stability map (100) being parameterized by a vibration reduction factor Fᵣ determined at least in the stable area (101),
the balancing controller (6) for balancing the rotor (3) and the rotor vibration sensor (4) being configured to implement at least the following steps (E10, E20, E30), carried out iteratively during the rotation of the rotor (3) about the axis of rotation (30) relative to the stator (2) at the determined rotation speed, in order to, at each iteration k:
during a first step (E10), measure, by the rotor vibration sensor (4), an amplitude Vₖ of a vibration V of the rotor (3) and a phase αₖ of the vibration V of the rotor (3) relative to a phase reference according to the equation *V* = *Vₖ* · *e^{j·αₖ},*
during a second step (E20), identify a value Hₖ of the adjustment parameter H and of a value βₖ of the adjustment parameter β, which are located in the stable area of the prescribed stability map (100) and for which *Fᵣ* < 1, by the balancing controller (6),
during a third step (E30), apply the heating power *Pₖ* = *r* · *Hₖ* · *Vₖ* · *e*^{*j*·(α*ₖ*+β*ₖ*)} by the heat treatment head (7) via the balancing controller (6) to the rotor (3) and in the presence of the vibration V measured by the rotor vibration sensor (4).

15. A computer program, including code instructions for the implementation of at least the second step (E20) and the third step (E30) of the method for balancing the rotor (3) of a rotating machine (1) according to any one of claims 1 to 13, when the computer program is executed on a controller (6).
